# EUROPÄISCHE PATENTSCHRIFT

(11) **EP 2 966 326 B1**
(45) Veröffentlichungstag und Bekanntmachung des Hinweises auf die Patenterteilung: **01.05.2019**
(21) Anmeldenummer: 15175916.4
(22) Anmeldetag: 08.07.2015
(51) Int. Cl.: F16K 7/06

(54) **SCHLAUCHQUETSCHVENTIL**
TUBING PINCH VALVE
VANNE À PINCEMENT

(30) Priorität: 11.07.2014 DE 102014010443
(43) Veröffentlichungstag der Anmeldung: 13.01.2016
(60) Teilanmeldung: 17152607.2
(73) Patentinhaber: GEMÜ Gebr. Müller Apparatebau GmbH & Co. Kommanditgesellschaft, 74653 Ingelfingen (DE)
(72) Erfinder: Hiller, Martin, 74906 Bad Rappenau (DE); Haidt, Harald, 74613 Öhringen (DE); Haas, Marcel, 74635 Kupferzell (DE); Frankenbach, Klaus, 74670 Forchtenberg-Schleierhof (DE)
(74) Vertreter: DREISS Patentanwälte PartG mbB

(56) Entgegenhaltungen:
- EP-A1- 1 132 108
- DE-B3-102011 055 850
- GB-A- 2 017 253
- GB-A- 2 274 326
- JP-A- H04 248 075
- JP-A- 2003 090 446
- JP-U- H0 487 074
- JP-U- S6 259 372
- JP-U- S58 187 660
- US-A- 3 589 668
- US-A- 5 462 251
- US-A1- 2012 232 495

## Beschreibung

Die Erfindung betrifft ein Schlauchquetschventil nach den Oberbegriffen der nebengeordneten Ansprüche.

Ein gattungsgemäßes Schlauchquetschventil ist beispielsweise aus DE 10 2011 055 850 bekannt. Bei diesem gibt es eine Quetscheinrichtung, welche ein flexibles Schlauchstück, durch das ein Medium strömen kann, so zusammendrücken kann, dass eine Strömung durch das Schlauchstück hindurch nicht mehr möglich ist. Darüber hinaus gibt es ein seitliches Rückstellelement, welches den zusammengequetschten Schlauch so seitlich beaufschlagt, dass dieser wieder in seinen offenen Zustand gelangt. Ein solches Rückstellelement ist vor allem dann notwendig, wenn der Druck im Schlauch nicht ausreicht, um das Schlauchstück wieder zu öffnen.

GB 2 017 253 A offenbart eine Vorrichtung zum Quetschen eines Rohres.

US 3 589 668 A offenbart eine Absperrvorrichtung für ein Rohr.

DE 10 2011 055 850 B3 offenbart eine gegenüber einem starren Widerlager verschiebliche Klemmbacke. Die Klemmbacke weist ein verschiebliches Stützelement sowie zwei gegenüberliegende, eine Schlauchführung wenigstens bereichsweise umgreifende Klauen.

EP 1 132 108 A1 offenbart eine Klemmvorrichtung zum Abklemmen eines Schlauchs. Die Klemmvorrichtung umfasst ein Schließorgan mit einem Schließstück zum Abklemmen des Schlauches und eine permanentmagnetische Halteeinrichtung zum Halten des Schließorgans.

Aufgabe der Erfindung ist die Erhöhung der Einsatzflexibilität eines Schlauchquetschventils.

Diese Aufgabe wird durch ein Schlauchquetschventil mit den Merkmalen der nebengeordneten Patentansprüche gelöst. Vorteilhafte Weiterbildungen sind in Unteransprüchen genannt. Ferner finden sich für die Erfindung wichtige Merkmale in der nachfolgenden Beschreibung und in der Zeichnung. Dabei können die Merkmale für die Erfindung sowohl in Alleinstellung als auch in ganz unterschiedlichen Kombinationen wichtig sein, ohne dass hierauf explizit hingewiesen wird.

Bei dem Schlauchquetschventils des ersten nebengeordneten Patentanspruchs liegt der Vorteil darin, dass es äußerst einfach aufgebaut ist und dennoch leicht an Schlauchabschnitte mit unterschiedlichen Durchmessern angepasst werden kann. Ein solches Schlauchquetschventil ist auch vergleichsweise preiswert und sehr robust, und der Schlauchabschnitt kann einfach in das Schlauchquetschventil eingelegt werden. Erreicht wird dies dadurch, dass das Schlauchquetschventil eine Adaptereinrichtung aufweist, welche in Einbaulage im Bereich der Schlauchaufnahme angeordnet und ausgebildet ist, um in Einbaulage einen effektiven Querschnitt wenigstens eines Bereichs der Schlauchaufnahme zu verändern.

Bei einer ersten Weiterbildung ist ein den Schlauchabschnitt kontaktierender Stützabschnitt der Adaptereinrichtung in Richtung der Schlauchachse gesehen von der Quetscheinrichtung beabstandet. Die Adaptereinrichtung ist daher von außen gut zugänglich und kann einfach ausgetauscht werden.

Möglich ist ferner, dass die Adaptereinrichtung einen auswechselbaren O-Ring umfasst, der in unverformtem Zustand in einer Ebene angeordnet ist, in der die Schlauchachse liegt, oder die parallel zu dieser Ebene ist. Wird das Schlauchstück eingesetzt, verformt sich der O-Ring und ist, bei eingelegtem Schlauchstück, zwischen dem Schlauchstück und einer entsprechenden und im allgemeinen halbkreisförmigen Ausnehmung der Schlauchaufnahme angeordnet bzw. verklemmt. Dies ist eine besonders einfache und preiswerte Realisierung.

In Weiterbildung hierzu wird vorgeschlagen, dass im Bereich der Schlauchaufnahme eine Nut zur Fixierung des O-Rings angeordnet ist und/oder eine Mehrzahl von Zapfen angeordnet ist, um die der O-Ring gelegt oder gespannt ist. Auf diese Weise ist der O-Ring zuverlässig fixiert und kann beim Einlegen des Schlauchstücks in die Schlauchaufnahme nicht verrutschen.

Möglich ist auch, dass die Adaptereinrichtung ein auswechselbares Adapterelement mit mindestens einer konkaven, vorzugsweise halbkreisförmigen Ausnehmung umfasst, wobei eine Stirnfläche der konkaven Ausnehmung als Auflagefläche für den flexiblen Schlauchabschnitt dient. Dies führt zu einem eher flächigen Aufliegen des Schlauchabschnitts an dem Adapterelement, wodurch der Schlauchabschnitt besonders zuverlässig gehalten ist und Beschädigungen vermieden werden.

In Weiterbildung hierzu wird vorgeschlagen, dass das Adapterelement eine Mehrzahl von konkaven, vorzugsweise halbkreisförmigen Ausnehmungen umfasst, die für unterschiedliche Schlauchdurchmesser ausgelegt sind. Beispielsweise ist es möglich, dass auf einer Seite eine halbkreisförmige Ausnehmung mit vergleichsweise großem Durchmesser und auf der anderen Seite eine halbkreisförmige Ausnehmung mit vergleichsweise kleinem Durchmesser vorhanden ist. Je nachdem, wie herum das Adapterelement eingesetzt wird, kann somit das gleiche Adapterelement für mindestens zwei unterschiedliche Schlauchdurchmesser eingesetzt werden. Die Anzahl der vorzuhaltenden Adapterelemente wird hierdurch reduziert.

Weitere Adapterelemente der Adaptereinrichtung können prismenförmig sein mit einer konischen Ausnehmung, wobei eine Stirnfläche der konischen Ausnehmung als Auflagefläche für den flexiblen Schlauchabschnitt dient, und wobei das Adapterelement in zum Schlauchabschnitt radialer Richtung federnd gelagert ist. Dabei kann anstelle einer Feder auch ein Satz von Ausgleichsplatten mit unterschiedlicher Dicke vorgesehen sein.

Ein anderes Adapterelement kann einen Gewindeschieber oder ein gefedertes Druckstück umfassen.

Nachfolgend werden Beispiele der vorliegenden Erfindung unter Bezugnahme auf die beiliegenden Zeichnungen näher erläutert. In den Zeichnungen zeigen:
- Figur 1A: eine perspektivische und teilweise transparente Ansicht auf eine erste Ausführungsform eines Schlauchquetschventils mit einer Adaptereinrichtung in einer ersten Stellung;
- Figur 1B: einen Längsschnitt durch das Schlauchquetschventil von Figur 1A;
- Figur 2A: eine Vorderansicht auf das Schlauchquetschventil von Figur 1;
- Figur 2B: einen Querschnitt durch das Schlauchquetschventil von Figur 2A;
- Figur 3A: eine Ansicht ähnlich wie Figur 1 mit der Adaptereinrichtung in einer zweiten Stellung;
- Figur 3B: einen Längsschnitt durch das Schlauchquetschventil von Figur 3A;
- Figur 4A: eine Vorderansicht auf das Schlauchquetschventil von Figur 3;
- Figur 4B: einen Querschnitt durch das Schlauchquetschventil von Figur 4A;
- Figur 5A: eine Ansicht ähnlich wie Figur mit der Adaptereinrichtung in einer dritten Stellung;
- Figur 5B: einen Längsschnitt durch das Schlauchquetschventil von Figur 5A;
- Figur 6A: eine Vorderansicht auf das Schlauchquetschventil von Figur 5;
- Figur 6B: einen Querschnitt durch das Schlauchquetschventil von Figur 6A;
- Figur 7a: eine Schnittdarstellung des Schlauchquetschventils der Figuren 5 und 6;
- Figur 7b: Ansichten eines Adapterelements der Adaptereinrichtung der Figuren 1 bis 7a;
- Figur 8: eine Draufsicht auf das Schlauchquetschventil der Figuren 1 bis 7a;
- Figur 9: einen Schnitt längs der Linie IX-IX von Figur 8;
- Figur 10: einen Schnitt längs der Linie X-X von Figur 8;
- Figur 11: einen Schnitt längs der Linie XI-XI von Figur 9;
- Figuren 12-17B: Schnitte durch eine zweite Ausführungsform eines Schlauchquetschventils mit einer Adaptereinrichtung mit einem oder zwei gefederten prismenförmigen Halter(n) als Adapterelement;
- Figuren 18-21: Schnitte durch eine dritte Ausführungsform eines Schlauchquetschventils mit einer Adaptereinrichtung mit einem prismenförmigen Halter und mindestens einer Ausgleichsplatte als Adapterelement;
- Figur 22 A: eine perspektivische Darstellung einer 4. Ausführungsform eines Schlauchquetschventils;
- Figuren 22B-27: Schnitte durch die vierte Ausführungsform eines Schlauchquetschventils mit einer Adaptereinrichtung mit einem O-Ring als Adapterelement;
- Figuren 28-30: Schnitte durch eine vierte Ausführungsform eines Schlauchquetschventils mit einer Adaptereinrichtung mit einem verstellbaren Gewindeschieber als Adapterelement;
- Figuren 31-33: Schnitte durch eine fünfte Ausführungsform eines Schlauchquetschventils mit einer Adaptereinrichtung mit einem gefederten Druckstück als Adapterelement;
- Figuren 34-35: Schnitte durch eine sechste Ausführungsform eines Schlauchquetschventils mit einer Adaptereinrichtung mit einem gefederten Druckstück als Adapterelement;
- Figur 36A: eine perspektivische Ansicht auf eine siebte Ausführungsform eines Schlauchquetschventils in einem Durchlasszustand;
- Figur 36B: einen Querschnitt durch das Schlauchquetschventil von Figur 36A;
- Figur 37A: eine Ansicht auf die siebte Ausführungsform in einem Sperrzustand;
- Figur 37B: einen Querschnitt durch das Schlauchquetschventil von Figur 37A;
- Figur 38A: eine Schnittdarstellung entsprechend Figur 36A;
- Figur 38B: eine Darstellung ähnlich zu Figur 38A;
- Figur 39A: eine Schnittdarstellung entsprechend Figur 37A;
- Figur 39B: eine Darstellung ähnlich zu Figur 39A;
- Figur 40A: eine transparente perspektivische Darstellung des Schlauchquetschventils der Figuren 36A bis 39B;
- Figur 40B: einen perspektivischen Längsschnitt durch das Schlauchquetschventil der Figuren 36A bis 40B;
- Figuren 41A-44A: transparente perspektivische Darstellungen zur Erläuterung des Zusammenbaus der Vorrichtung von Figur 36;
- Figuren 41B-44B: Schnittdarstellungen entsprechend den Figuren 41A bis 44A;
- Figur 45A: eine teilweise transparente perspektivische und teilweise geschnittene Ansicht einer achten und zur siebten ähnlichen Ausführungsform;
- Figur 45B: einen Querschnitt durch das Schlauchquetschventil von Figur 45A bei geöffnetem Gehäuseoberteil;
- Figur 45C: eine Darstellung ähnlich zu Figur 45B bei geschlossenem Gehäuseoberteil;
- Figur 46A: eine teilweise transparente perspektivische Darstellung einer neunten Ausführungsform eines Schlauchquetschventils in einem Sperrzustand;
- Figur 46B: eine perspektivische Darstellung des Schlauchquetschventils von Figur 46A;
- Figur 47A: eine perspektivische Schnittdarstellung des Schlauchquetschventils von Figur 46A und 46B;
- Figur 47B: eine weitere perspektivische Schnittdarstellung ähnlich zu Figur 47A;
- Figur 48: eine vergrößerte Detailansicht von Figur 47;
- Figur 49: einen Schnitt gemäß Figur 46;
- Figur 50: eine vergrößerte Detailansicht von Figur 49;
- Figur 51A: eine teilweise transparente perspektivische Darstellung einer zehnten Ausführungsform eines Schlauchquetschventils in einem Sperrzustand;
- Figur 51B: eine perspektivische Darstellung des Schlauchquetschventils von Figur 51A;
- Figur 52A: eine perspektivische Schnittdarstellung des Schlauchquetschventils der Figuren 51A und 51B;
- Figur 52B: eine weitere perspektivische Schnittdarstellung ähnlich zu Figur 52A;
- Figur 53: eine vergrößerte Detailansicht der Figuren 52A und 52B;
- Figur 54: eine Ansicht von oben auf das Schlauchquetschventil von Figur 51;
- Figur 55: einen Schnitt längs der Linie VI-VI von Figur 54;
- Figur 56: einen Schnitt längs der Linie VII-VII von Figur 55;
- Figur 57: eine teilweise transparente perspektivische Darstellung einer elften Ausführungsform eines Schlauchquetschventils in einem Durchlasszustand;
- Figur 58: eine teilweise transparente Seitenansicht auf das Schlauchquetschventil von Figur 57;
- Figur 59A: eine teilweise transparente perspektivische Ansicht eines Bereichs des Schlauchquetschventils von Figur 57 in einem Sperrzustand;
- Figur 59B: eine perspektivische Schnittdarstellung des Schlauchquetschventils von Figur 59A;
- Figur 60A: eine teilweise transparente perspektivische Ansicht eines Bereichs des Schlauchquetschventils von Figur 57 in einem Durchlasszustand;
- Figur 60B: eine perspektivische Schnittdarstellung des Schlauchquetschventils von Figur 60A;
- Figur 61: eine Ansicht von oben auf das Schlauchquetschventil von Figur 57;
- Figur 62: einen Schnitt längs der Linie XIII-XIII von Figur 61; und
- Figur 63: einen Schnitt längs der Linie XIV-XIV von Figur 62.

In allen Figuren tragen funktionsäquivalente Elemente und Bereiche die gleichen Bezugszeichen.

Ein Schlauchquetschventil trägt insgesamt das Bezugszeichen 10. Es umfasst eine Schlauchaufnahme 12 zur Aufnahme eines auswechselbaren flexiblen Schlauchabschnitts 14. Ferner ist eine Quetscheinrichtung 16 mit einem Klemmelement 18 und einem diesem zugeordneten Widerlager 20 vorhanden, wobei der in der Schlauchaufnahme 12 aufgenommene flexible Schlauchabschnitt 14 durch Bewegen des Klemmelements 18 zwischen Klemmelement 18 und Widerlager 20 aus einem Durchlasszustand in einen Sperrzustand in einer zu einer Schlauchachse 22 orthogonalen Quetschrichtung 24 quetschbar ist.

Insbesondere wird durch einen in den Figuren nicht gezeigten Antrieb, der an dem in den Figuren unteren Ende des Schlauchquetschventils 10 an einem Gehäuse 25 angeordnet ist, das Klemmelement 18, das vorliegend als quer zur Schlauchachse 22 verlaufendes balkenartiges Teil ausgebildet ist, zum Überführen des Schlauchabschnitts 14 in den Sperrzustand relativ zum Gehäuse 25 in der Figur nach oben bewegt, wodurch der Schlauchabschnitt 14 zwischen Klemmelement 18 und dem zum Gehäuse stationären Widerlager 20 gequetscht bzw. geklemmt wird. Das Widerlager 20 ist entsprechend ebenfalls als quer zur Schlauchachse 22 verlaufendes balkenartiges Teil ausgebildet.

Das Schlauchquetschventil 10 umfasst ferner eine im Bereich der Schlauchaufnahme 12 angeordnete bewegliche Rückstelleinrichtung 26 mit einem Rückstellelement 28, welche in einer ersten Position eine durch das Quetschen bewirkte Dimensionsvergrößerung des Schlauchabschnittes 14 orthogonal sowohl zu der Quetschrichtung 24 als auch zur Schlauchachse 22 zulässt und in einer zweiten Position eine sowohl zur Quetschrichtung 24 als auch zur Schlauchachse 22 orthogonale Kraftkomponente auf den Schlauchabschnitt 14 aufbringt, wodurch dieser wieder in seine (kreisrunde) Ausgangsform zurückgeführt wird.

Diese Kraftkomponente ist, bezogen auf die Schlauchachse 22, nach radial einwärts gerichtet und sorgt dafür, dass beispielsweise dann, wenn in dem Schlauchabschnitt 14 ein nur relativ geringer Innendruck herrscht und das Material, aus dem der Schlauchabschnitt 14 hergestellt ist, keine ausreichende Rückstellkraft bereitstellt, der Schlauchabschnitt 14 von dem gesperrten wieder in den geöffneten Zustand gezwungen wird, wenn das Klemmelement 18 wieder aus der Klemmposition in die geöffnete Position gebracht wurde.

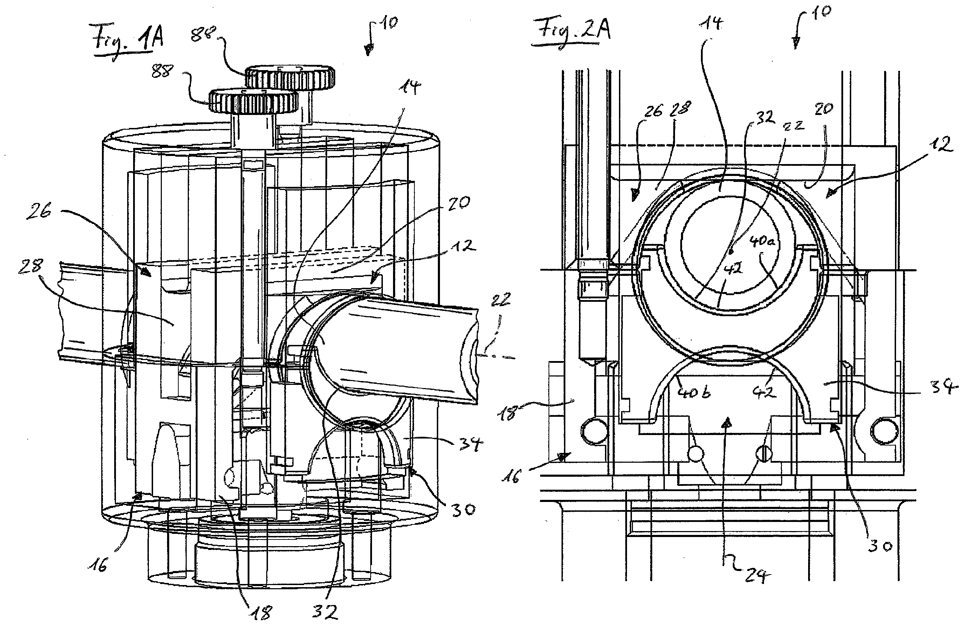

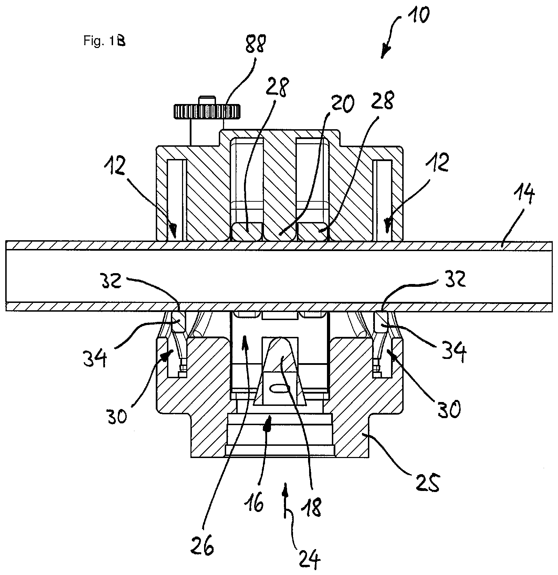

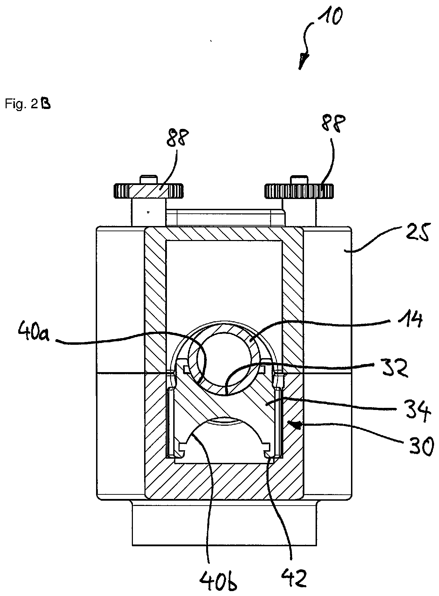

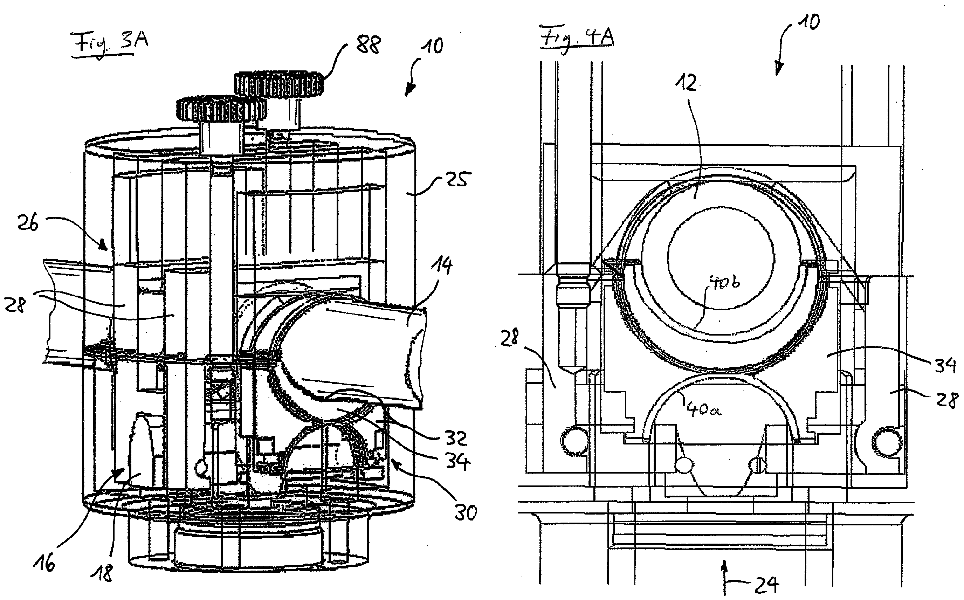

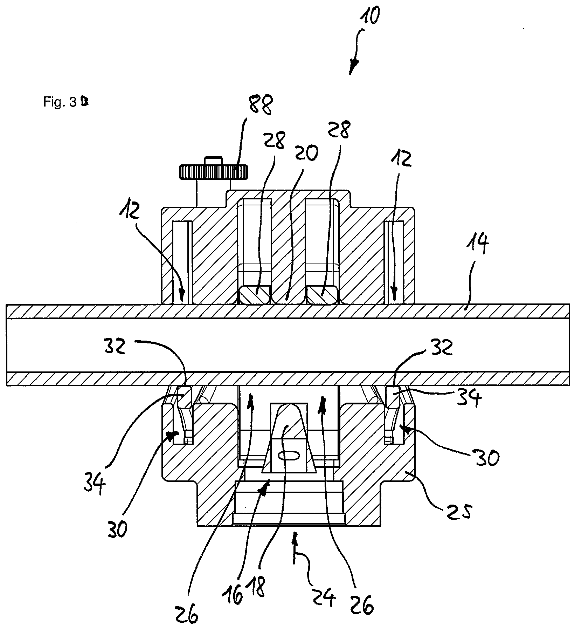

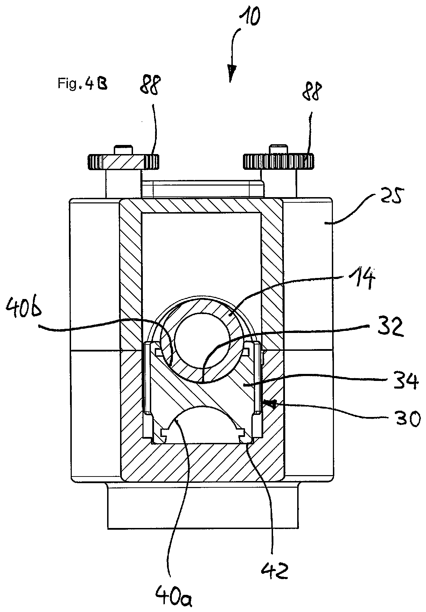

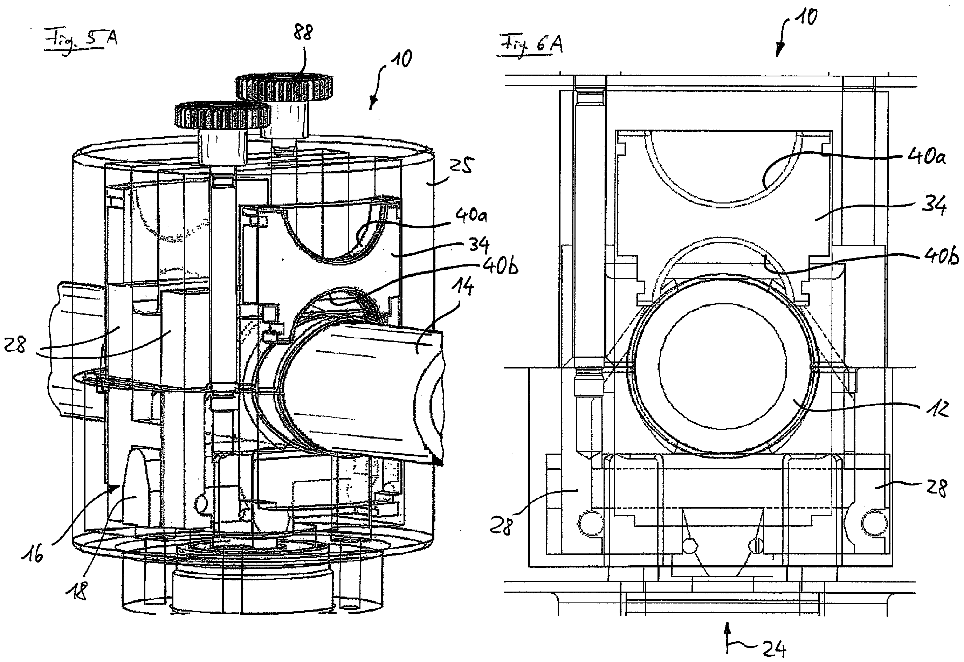

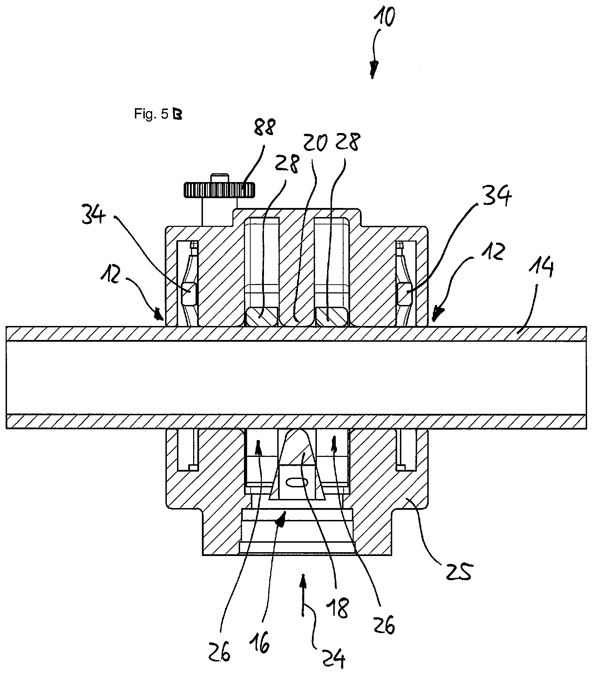

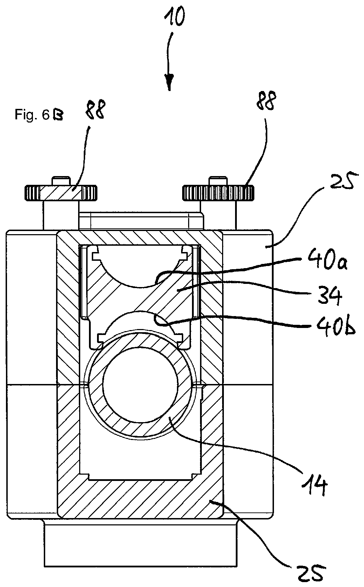

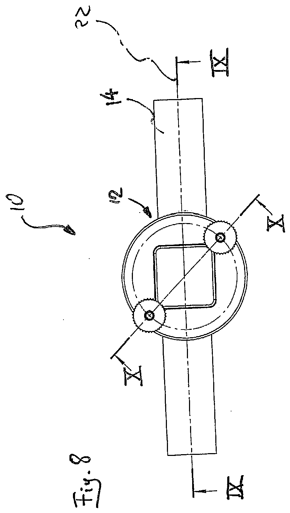

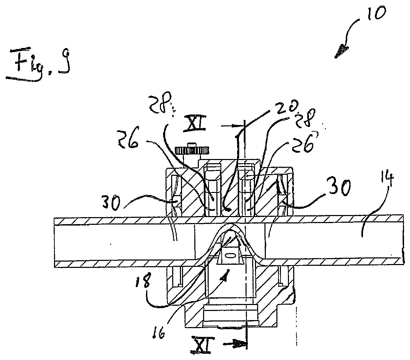

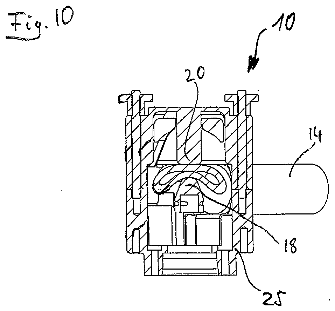

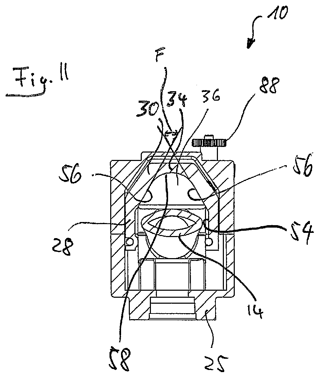

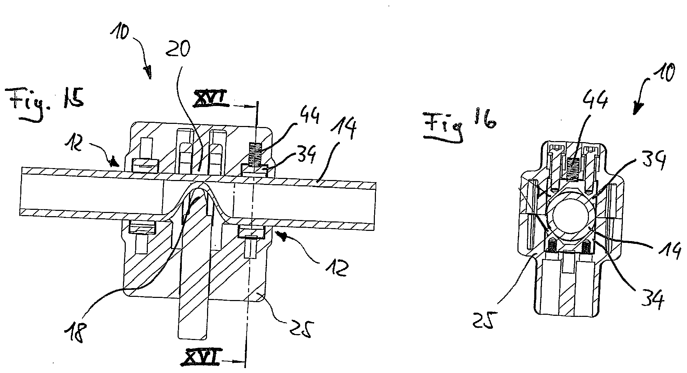

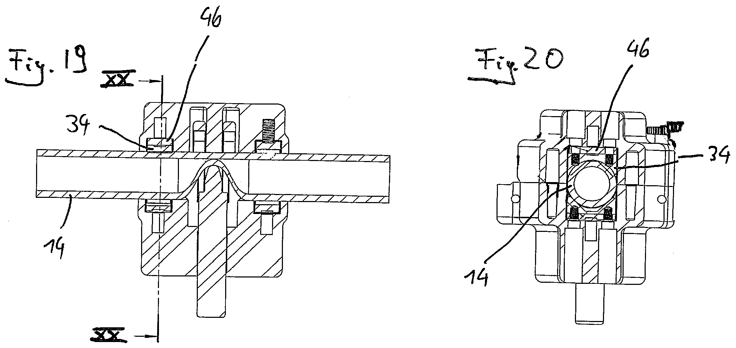

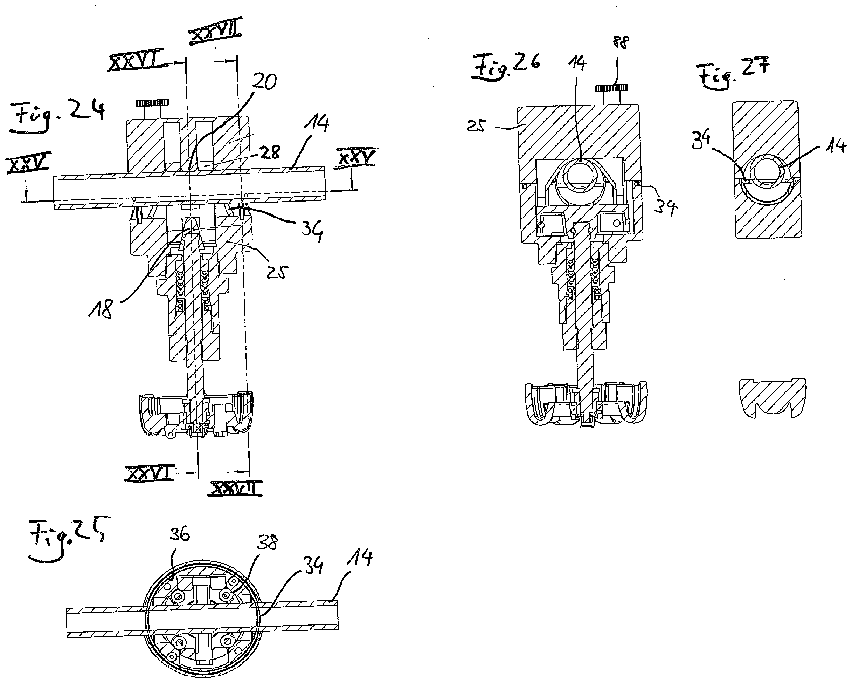

Das Schlauchquetschventil 10 weist ferner in den Figuren 1 bis 35 mindestens eine Adaptereinrichtung 30 auf, welche in Einbaulage im Bereich der Schlauchaufnahme 12 angeordnet und ausgebildet ist, um in Einbaulage einen effektiven Querschnitt wenigstens eines Bereichs der Schlauchaufnahme 12 zu verändern, so dass wahlweise Schlauchabschnitte 14 mit unterschiedlichen Außendurchmesser sicher und fest in der Schlauchaufnahme 12 gehaltert werden können. Insbesondere wird durch die Adaptereinrichtung 30 dafür gesorgt, dass der Schlauchabschnitt 14 unabhängig davon, welchen Durchmesser er aufweist, in der nicht-gesperrten Ruhelage zuverlässig mit seinem in den Figuren oberen Rand am Widerlager 20 anliegt.

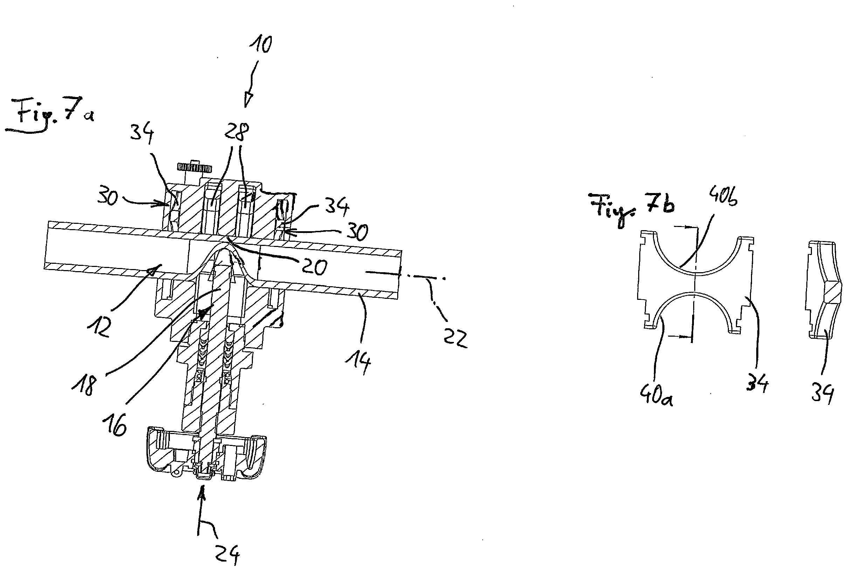

Wie beispielsweise aus Figur 7a hervorgeht, ist ein den Schlauchabschnitt 14 kontaktierender Stützabschnitt 32 eines Adapterelements 34 der Adaptereinrichtung 30 in Richtung der Schlauchachse 22 gesehen von der Quetscheinrichtung 16 beabstandet. Allerdings ist im Hinblick auf Figur 7A zu beachten, dass diese jenen Fall zeigt, bei dem der Außendurchmesser des Schlauchabschnitts 14 so groß ist, dass das Adapterelement 34 nicht benötigt wird. Stattdessen ist in diesem Fall der Innendurchmesser der Schlauchaufnahme 12, die eine kreisrunde Öffnung im Gehäuse 25 bildet, gleich dem Außendurchmesser des Schlauchabschnitts 14. Damit das Adapterelement 34 nicht verloren geht, ist es in diesem in Figur 7A gezeigten Fall oberhalb vom Schlauchabschnitt 14 im Bereich der Schlauchaufnahme 12 funktionslos angeordnet, wird dort also lediglich aufbewahrt.

Gemäß den Figuren 1-11 umfasst die Adaptereinrichtung 30 ein auswechselbares bzw. in unterschiedlichen Lagen anordenbares Adapterelement 34 mit mindestens einer konkaven, vorzugsweise halbkreisförmigen Ausnehmung 40, wobei eine Stirnfläche 42 der konkaven Ausnehmung 40 als Auflagefläche für den flexiblen Schlauchabschnitt 14 dient. Das Adapterelement 34 weist dabei eine Mehrzahl von konkaven, vorzugsweise halbkreisförmigen Ausnehmungen 40a und 40b auf, die für unterschiedliche Schlauchdurchmesser ausgelegt sind. Bei der in den Figuren 1-11 konkret gezeigten Ausführungsform sind zwei halbkreisförmige Ausnehmungen 40A und 40B vorhanden, die an entgegengesetzten Rändern des plattenförmigen Adapterelements 34 ausgebildet sind. Je nachdem, wie das Adapterelement 34 angeordnet wird, wird der effektive Querschnitt der Schlauchaufnahme 12 verändert. Dies bewirkt, dass Schlauchabschnitte 14 mit unterschiedlichen Außendurchmessern sicher in der Schlauchaufnahme 12 des Schlauchquetschventils 10 gehaltert werden können.

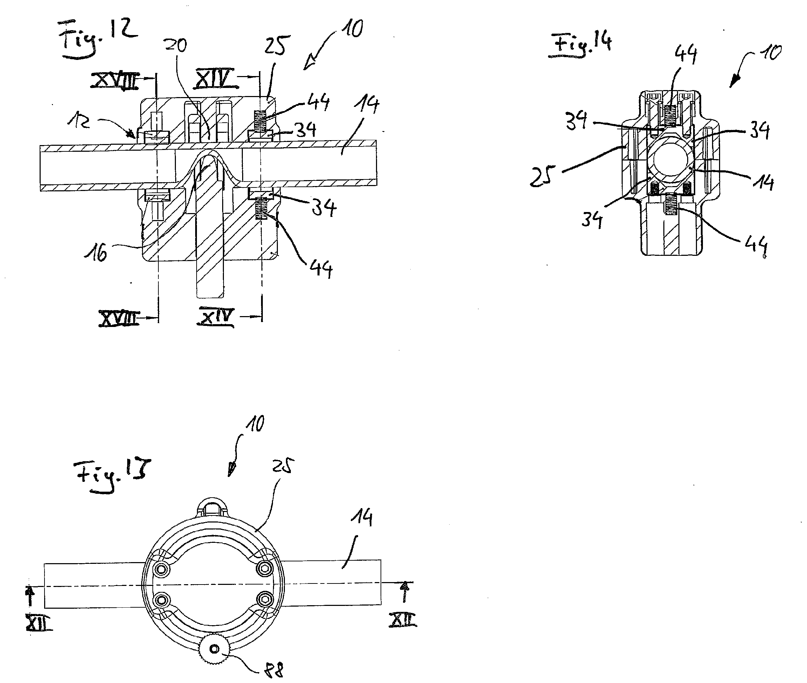

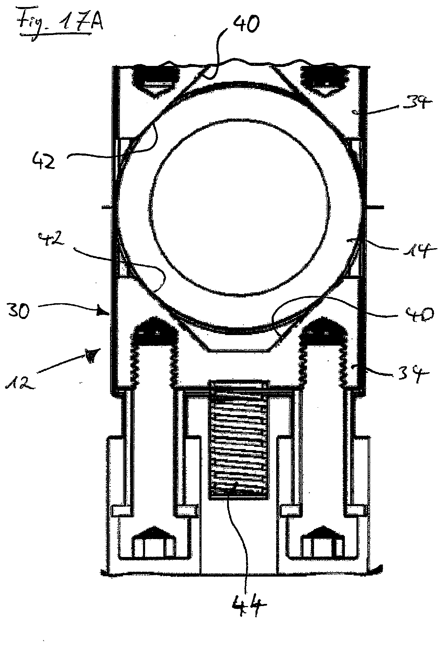

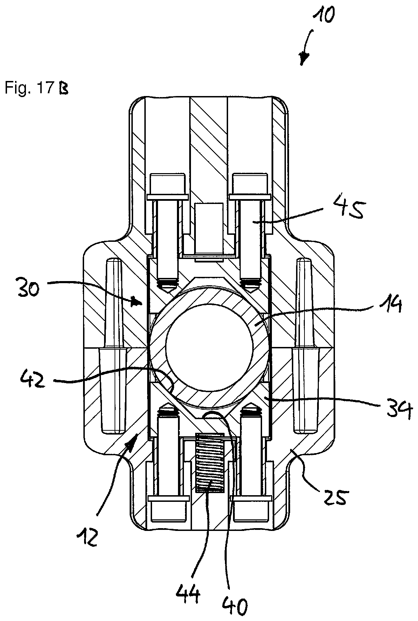

Gemäß den Figuren 12-17 umfasst die Adaptereinrichtung 30 prismenförmige Adapterelemente 34 mit einer konischen Ausnehmung 40, wobei eine schräge Stirnfläche 42 der konischen Ausnehmung 40 als Auflagefläche für den flexiblen Schlauchabschnitt 14 dient, und wobei das Adapterelement 34 in zum Schlauchabschnitt 14 radialer Richtung federnd gelagert ist, indem eine Feder 44 zwischen dem Gehäuse 25 und dem Adapterelement 34 verspannt ist. Wie insbesondere aus Figur 17B hervorgeht, sind in das Gehäuse 25 Führungszapfen 45 eingeschraubt, auf denen die jeweiligen Adapterelemente 34 gleitend geführt sind. Aus den Figuren 12-17 ergibt sich ferner, dass es bevorzugt ist, dass nur eines der beiden auf gegenüberliegenden Seiten des Schlauchabschnitts 14 angeordneten Adapterelemente 34 durch eine Feder 44 vorgespannt wird, und zwar bevorzugt jenes, welches auf jener Seite des Schlauchabschnitts 14 liegt, auf der auch das Klemmelement 18 angeordnet ist.

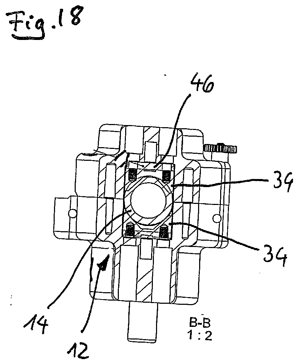

Entsprechend den Figuren 18-21 kann anstelle einer Feder auch ein Satz von Ausgleichsplatten 46 mit unterschiedlicher Dicke vorgesehen sein. In beiden Fällen wird die effektive Weite der Schlauchaufnahme 12 an den spezifischen Außendurchmesser des gerade eingesetzten Schlauchabschnitts 14 angepasst, so dass dieser sicher gehaltert ist.

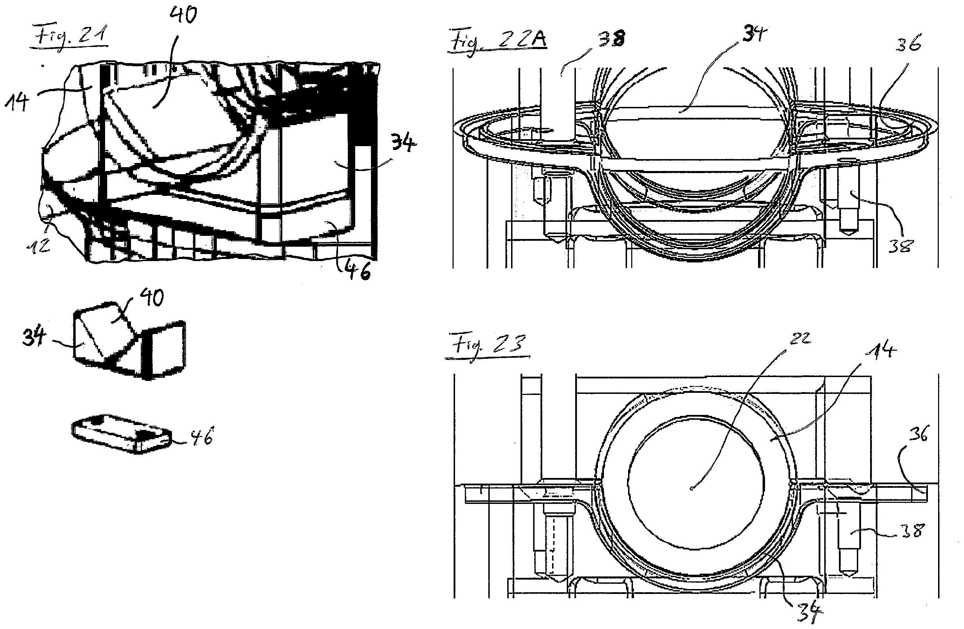

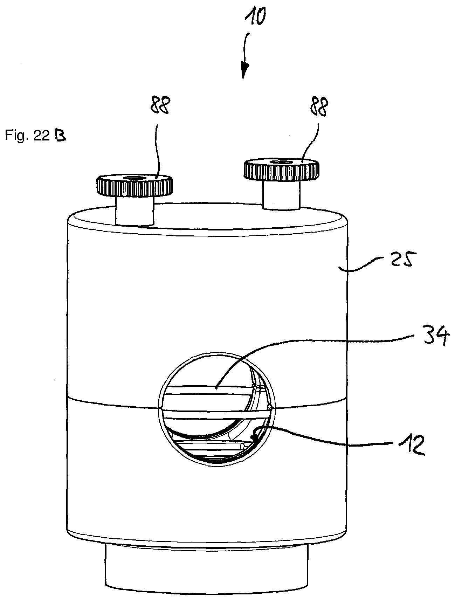

Gemäß den Figuren 22-27 umfasst die Adaptereinrichtung 30 als Adapterelement einen auswechselbaren O-Ring 34, der in unverformtem Zustand in einer Ebene angeordnet ist, in der die Schlauchachse 22 liegt, oder die parallel zu dieser Ebene ist. Im Bereich der Schlauchaufnahme 12 ist in einem Ventilgehäuseabschnitt (ohne Bezugszeichen) eine Nut 36 zur Fixierung des O-Rings 34 angeordnet, und es ist eine Mehrzahl von Zapfen 38 angeordnet, um die der O-Ring 34 gelegt bzw. gespannt ist. Beim Einlegen des Schlauchabschnitts 14 in das Gehäuse 25 wird der O-Ring 34 im Bereich der Schlauchaufnahme 12 aus seiner Ebene heraus in etwa halbkreisförmig elastisch verformt. Durch den O-Ring 34 wird der effektive Querschnitt der Schlauchaufnahme 12 reduziert, so dass auch Schlauchabschnitte 14 mit kleinerem Durchmesser eingesetzt werden können.

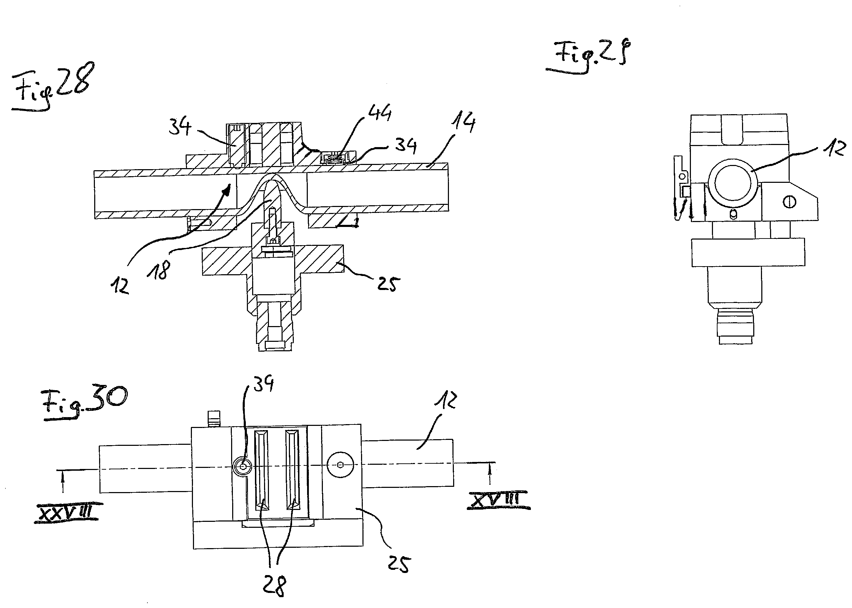

Gemäß den Figuren 28-30 verfügt das Schlauchquetschventil 10 über eine Adaptereinrichtung 30 mit einem Gewindeschieber 34 als Adapterelement (oben links in Figur 28), durch den ebenfalls der spezielle Schlauchabschnitt 14 in der Schlauchaufnahme 12 sicher gehaltert werden kann. Der Gewindeschieber 34 kann beispielsweise als Inbusschraube ausgebildet sein, die in eine Gewindeöffnung im Gehäuse 25 eingeschraubt wird und im Bereich der Schlauchaufnahme 12 ein einstellbares Gegenlager für den Schlauchabschnitt 14 bildet.

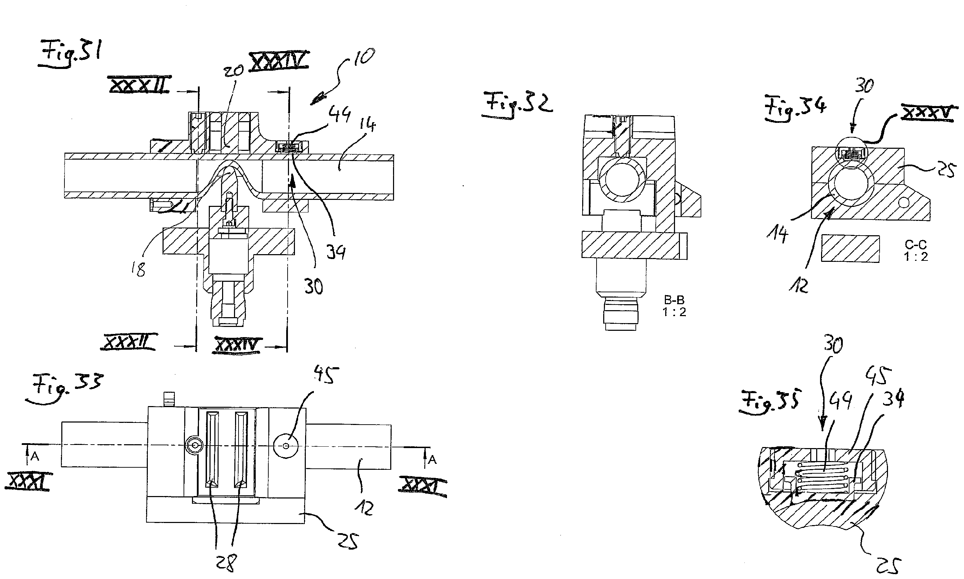

Gemäß den Figuren 31-35 verfügt das Schlauchquetschventil 10 über eine Adaptereinrichtung 30 mit einem gefederten Druckstück als Adapterelement 34, wobei sich die Feder 44 an einer in das Gehäuse 25 eingeschraubten Gewindehülse 45 abstützt, wodurch die Federvorspannung und dadurch die auf den Schlauchabschnitt 14 einwirkende Haltekraft eingestellt werden kann.

Man erkennt aus den Figuren 28-30 einerseits und 31-35 andererseits, dass der Gewindeschieber und das gefederten Druckstück kombiniert eingesetzt werden können. Möglich ist aber auch, dass zu beiden Seiten des Klemmelements 18 jeweils ein Gewindeschieber oder jeweils ein gefedertes Druckstück vorhanden ist.

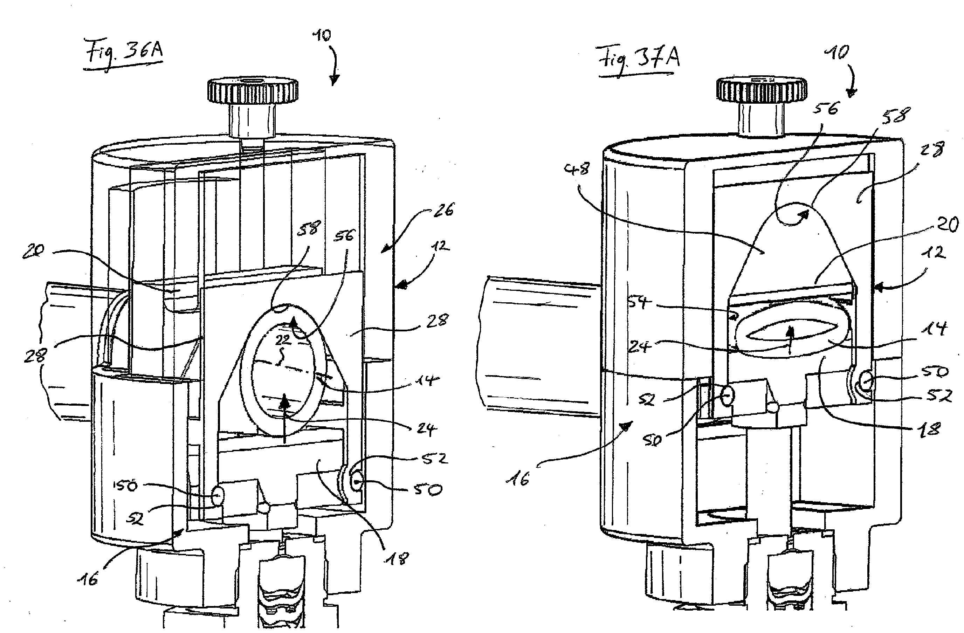

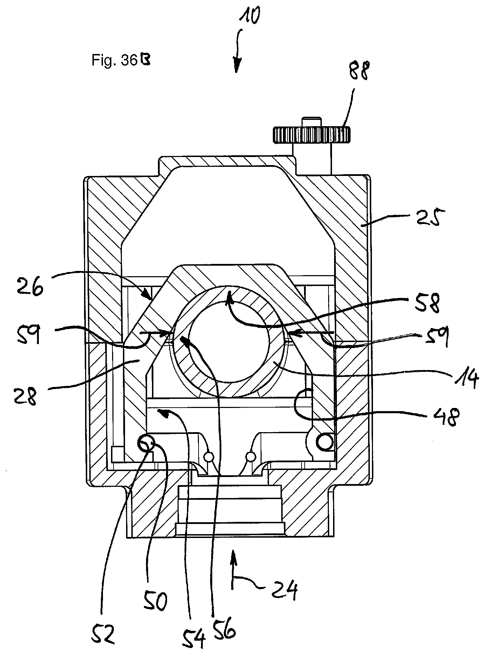

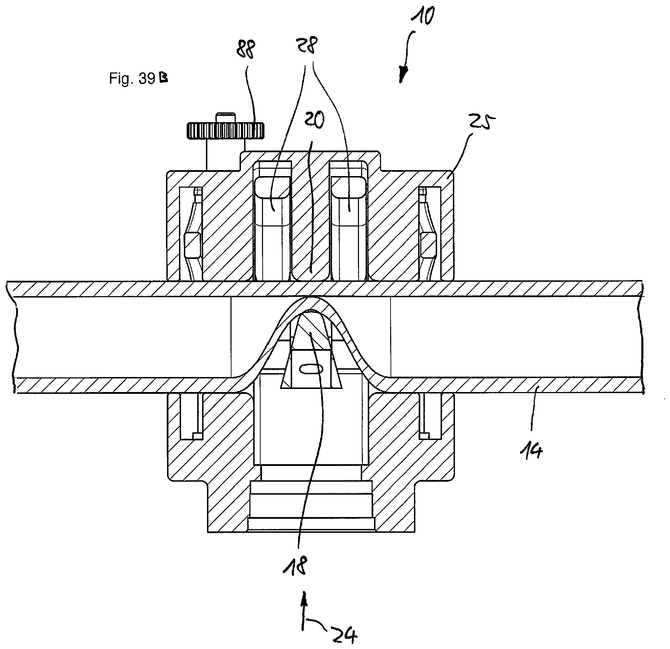

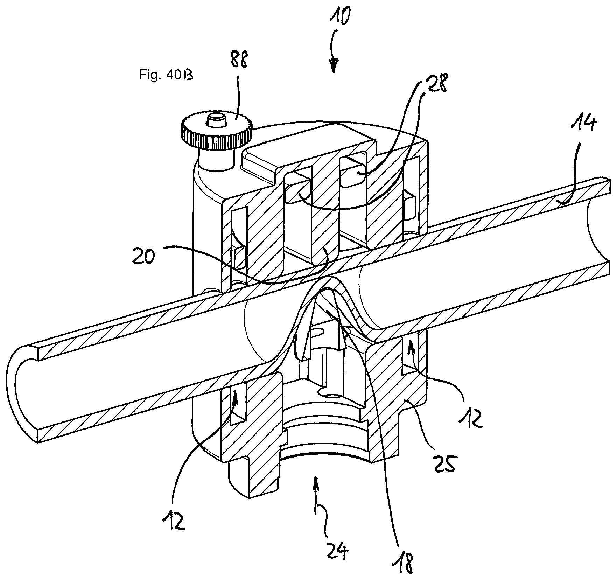

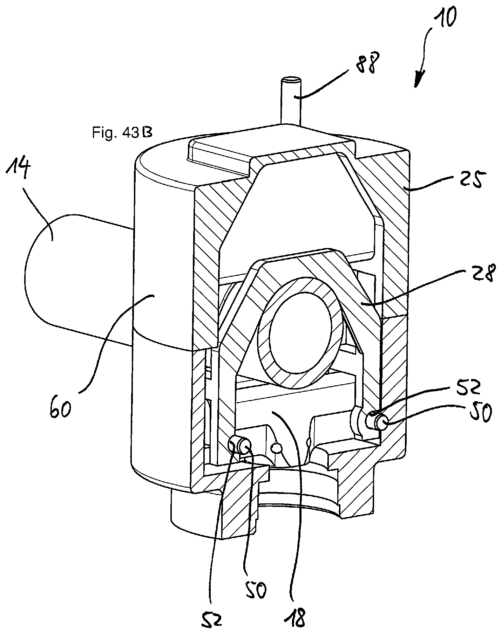

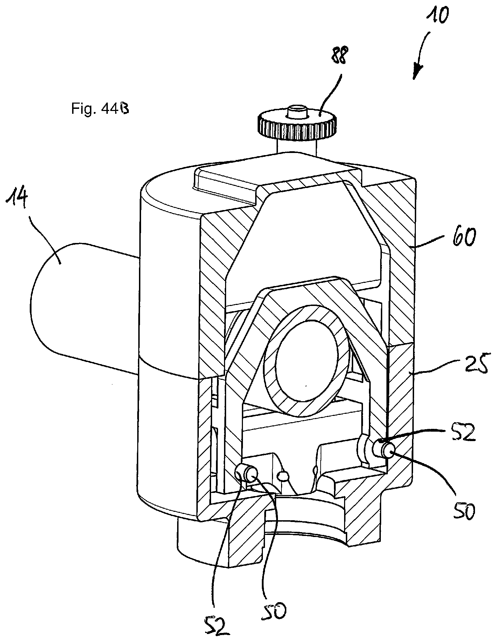

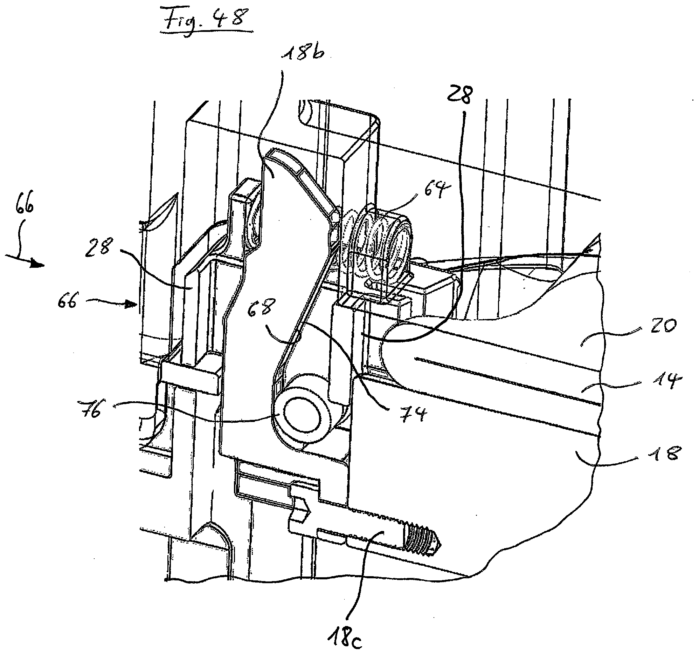

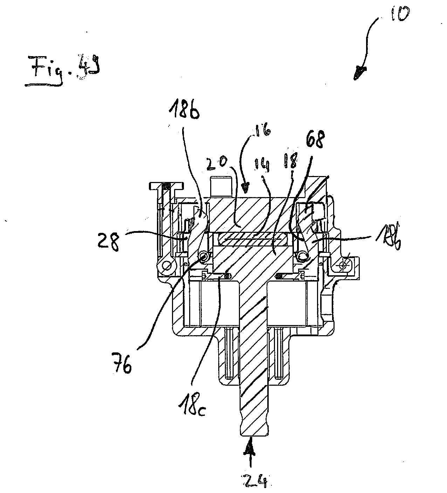

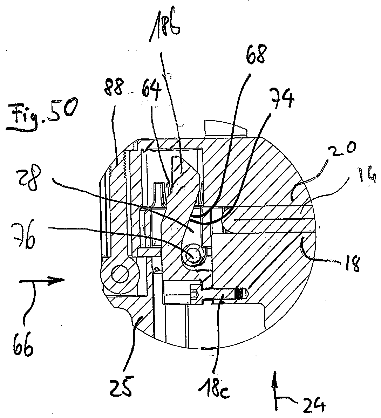

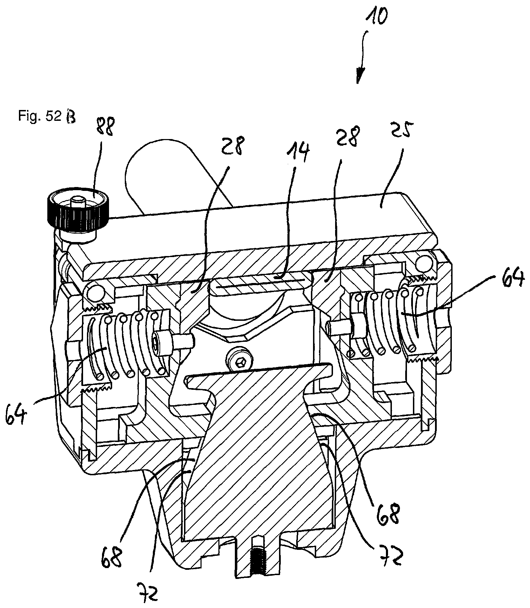

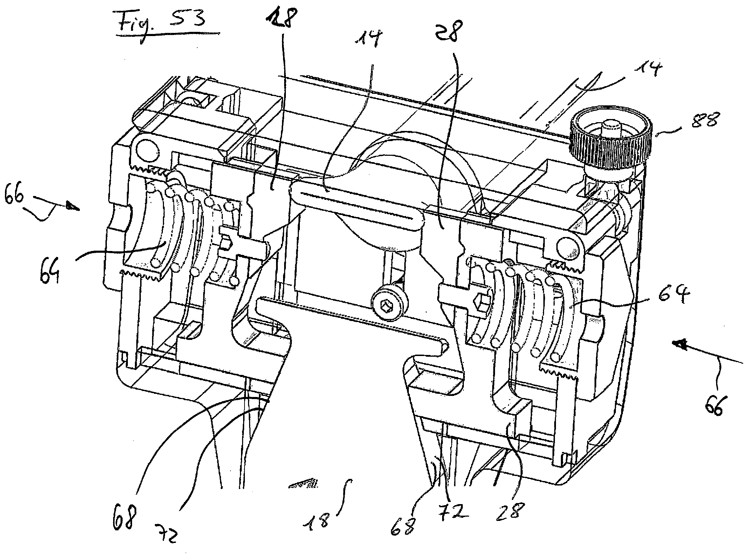

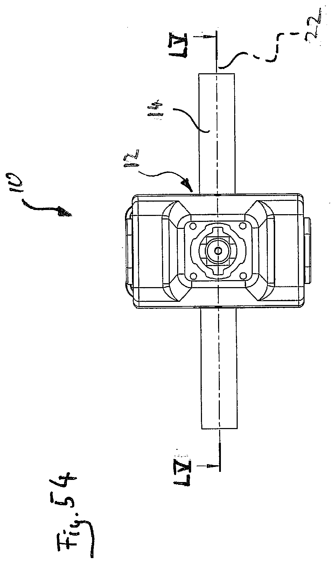

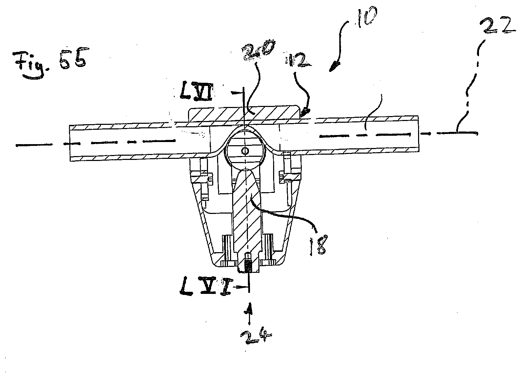

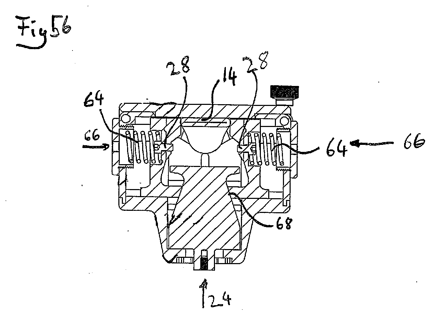

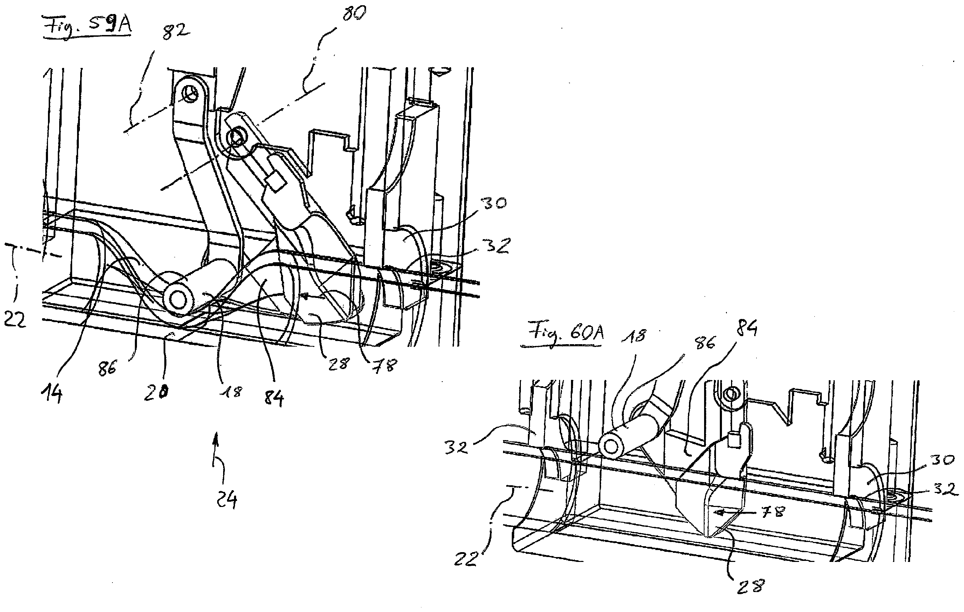

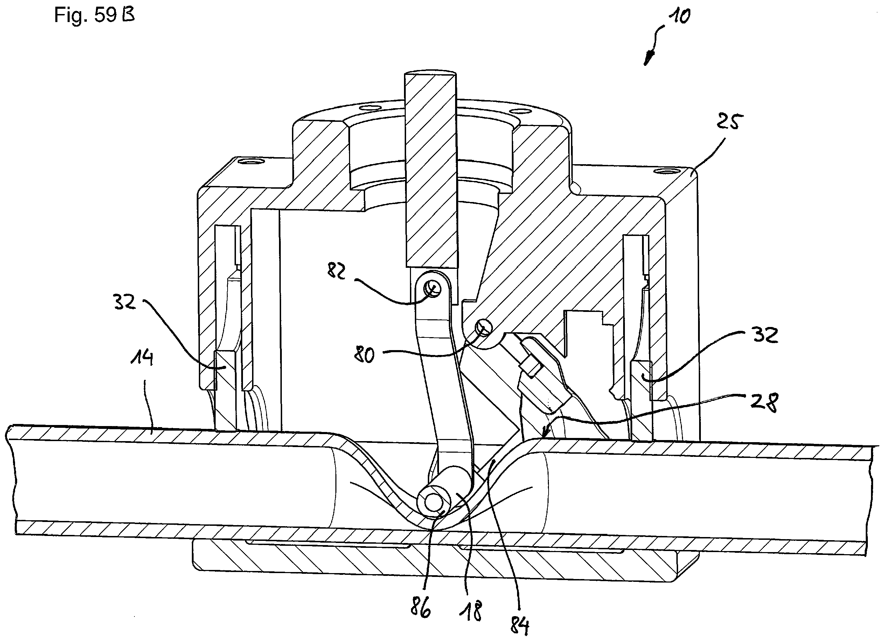

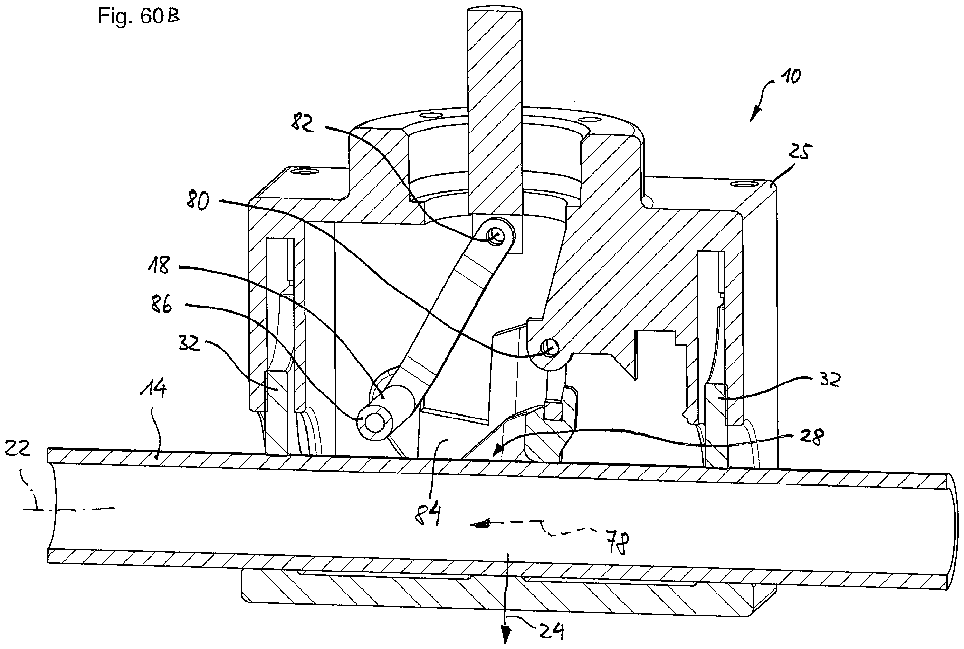

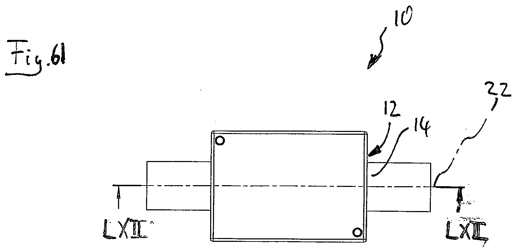

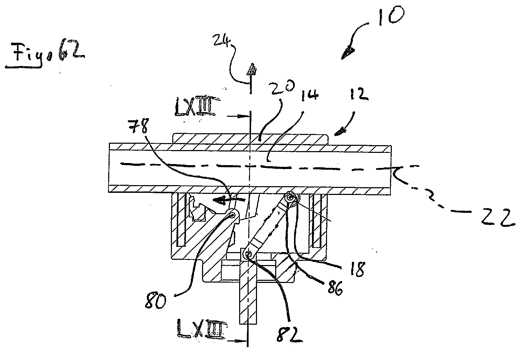

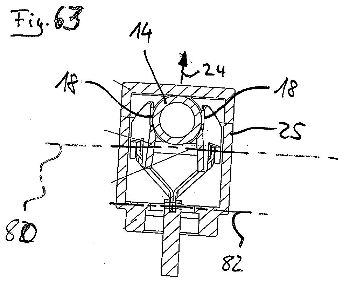

Die in den Figuren 36-63 gezeigten alternativen Schlauchquetschventile 10 offenbaren unterschiedliche Arten von Rückstelleinrichtungen 26. Es versteht sich, dass diese mit den oben beschrieben Adaptereinrichtungen 30 beliebig kombinierbar sind, und auch ohne diese anwendbar sind.

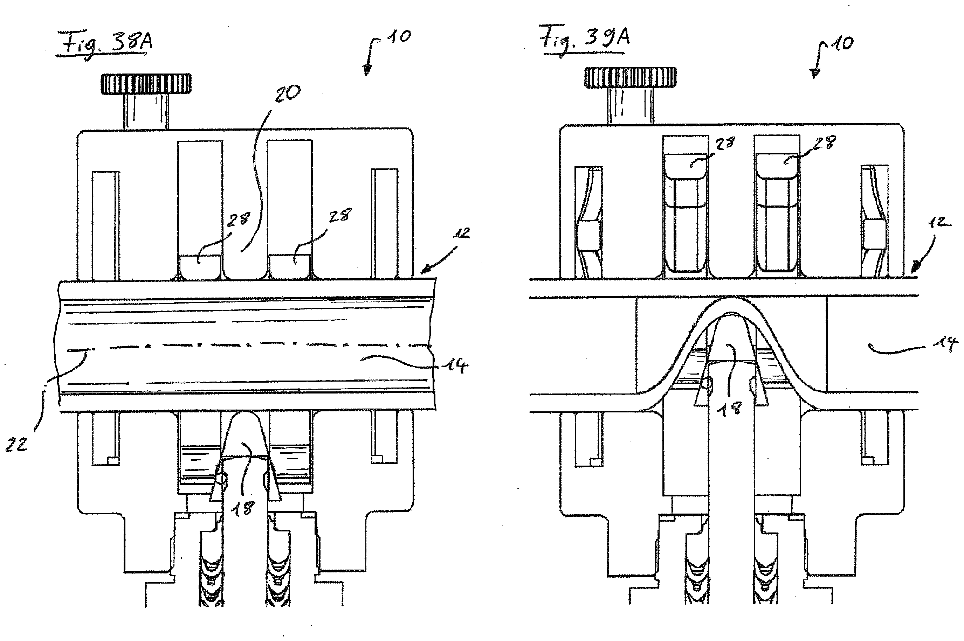

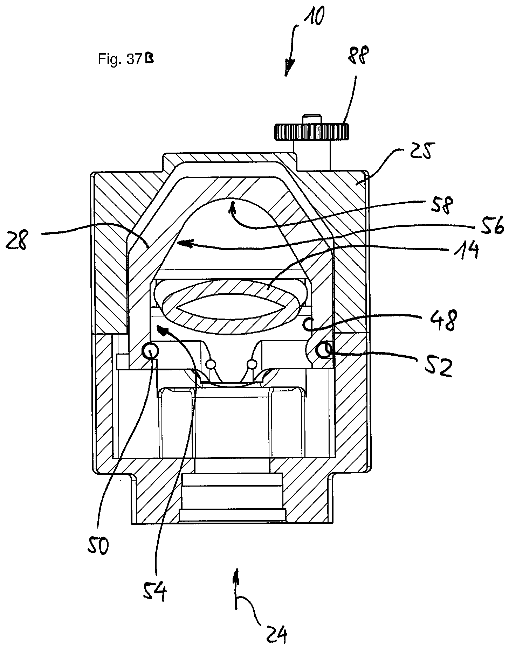

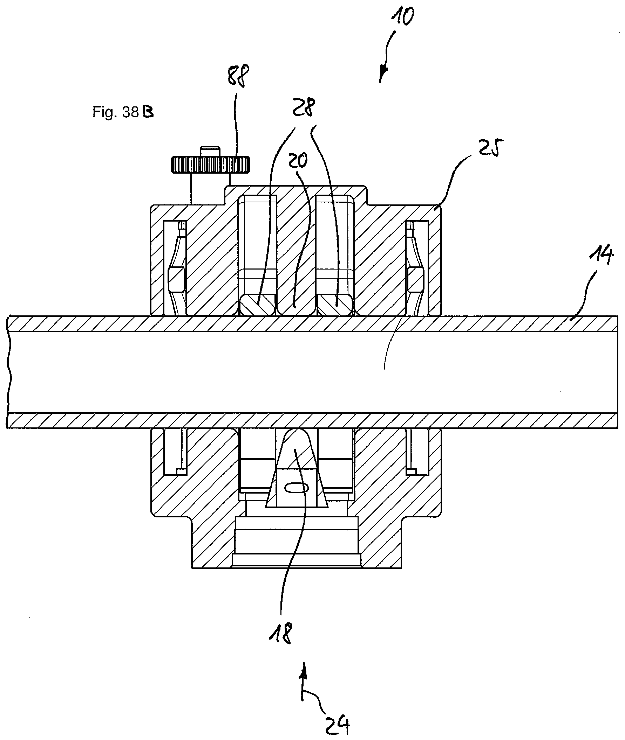

Die Rückstelleinrichtung der Figuren 36-45 umfasst als Rückstellelement einen Rückstellrahmen 28 mit einer Ausnehmung 48, in der der Schlauchabschnitt 14 angeordnet ist. Dabei zeigen die Figuren 36 und 38 das Schlauchquetschventil 10 im offenen Zustand, bei dem der Schlauchabschnitt 14 nicht gequetscht ist, wohingegen die Figuren 37, 39 und 40 das Schlauchquetschventil 10 im geschlossenen Zustand zeigen, bei dem der Schlauchabschnitt 14 durch das Klemmelement 18 gequetscht ist. Die Ausnehmung 48 weist eine in Quetschrichtung 24 wenigstens abschnittsweise veränderliche Weite auf. Der Rückstellrahmen 28 ist mit dem Klemmelement 18 über Zapfen 50 und seitliche Ausnehmungen 52 gekoppelt.

Die Ausnehmung 48 weist in einem zum Klemmelement 18 benachbarten Bereich 54 eine konstante und mindestens einer maximalen Abmessung des Schlauchabschnitts 14 in dessen Sperrzustand entsprechende Weite auf, wohingegen sie sich in einem vom Klemmelement 18 entfernten Bereich 56 konisch verjüngt. Eine Spitze 58 des Konus ist abgerundet und weist einen Radius auf, der dem Außenradius des Schlauchabschnitts 14 in dessen Durchlasszustand entspricht. Man erkennt aus den Figuren 38-39, dass das Schlauchquetschventil 10 zwei Rückstelleinrichtungen 26 umfasst, die in Richtung der Schlauchachse 22 gesehen beidseits zu der Quetscheinrichtung 16 angeordnet sind.

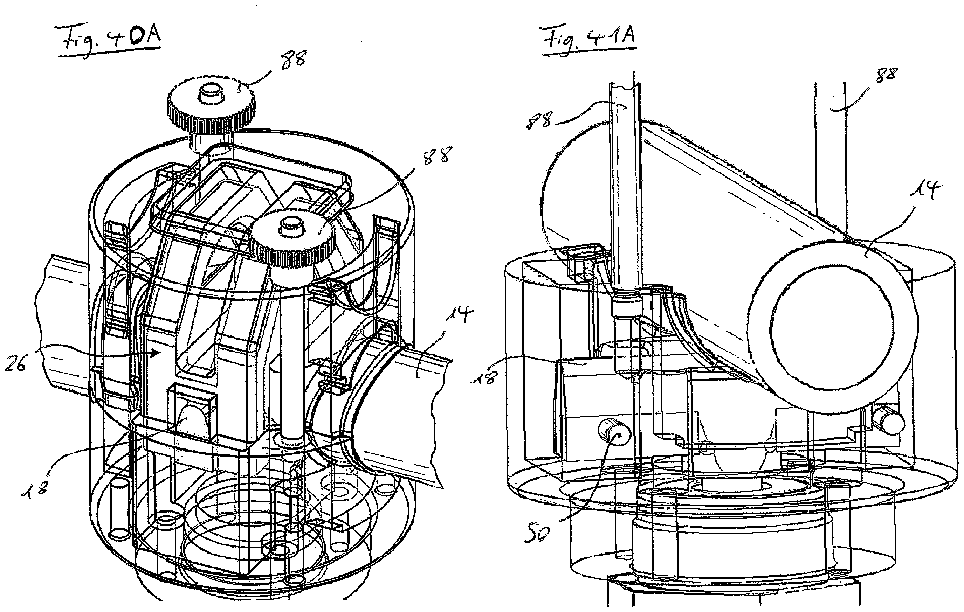

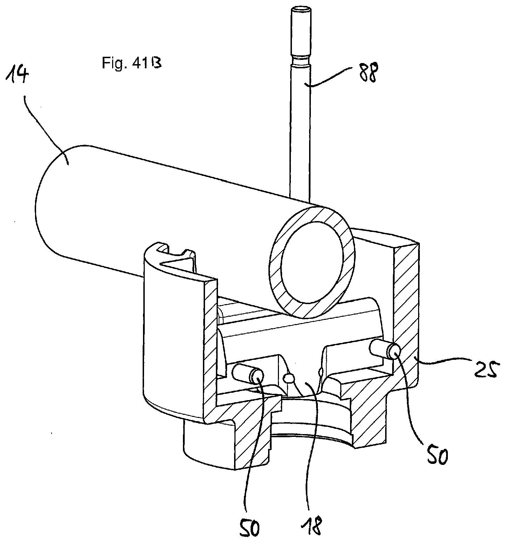

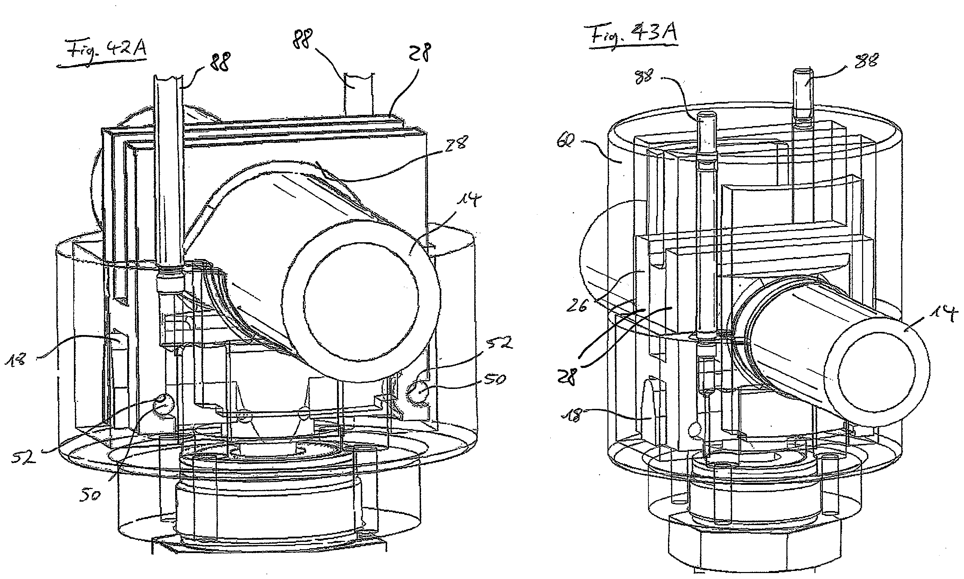

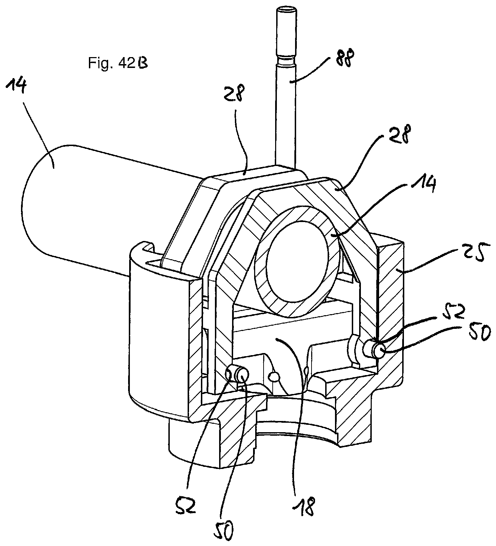

Die Montage erfolgt entsprechend den Figuren 41-44. Dabei werden die Ausnehmungen 52 in die Zapfen 50 durch eine vertikale und dann eine seitliche Bewegung des Rückstellelements 28 (Pfeile in Figur 42) eingeführt. Dann wird das Gehäuseoberteil 60 aufgesetzt, wodurch die Rückstelleinrichtung 26 seitlich festgelegt wird.

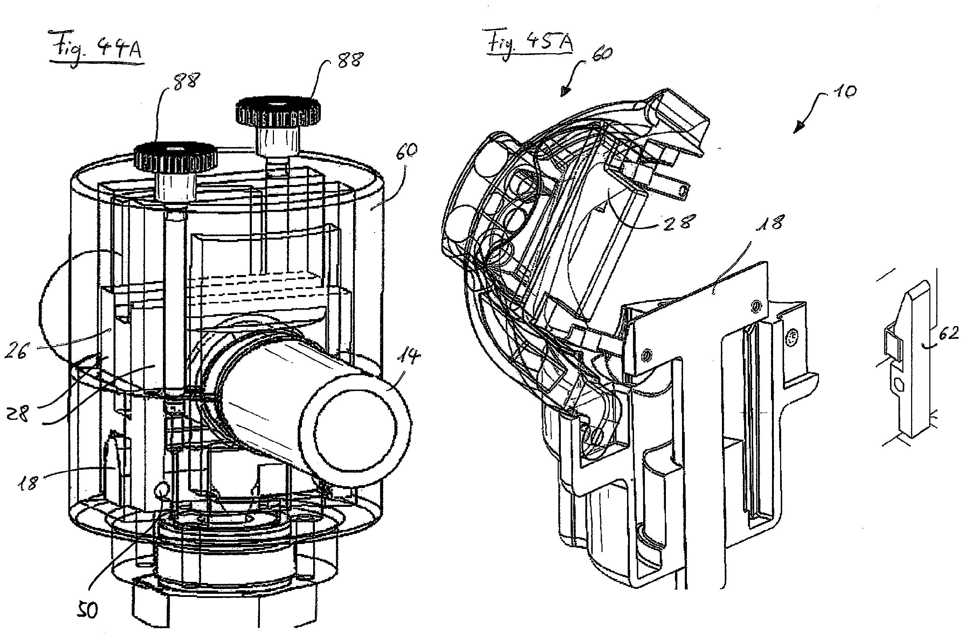

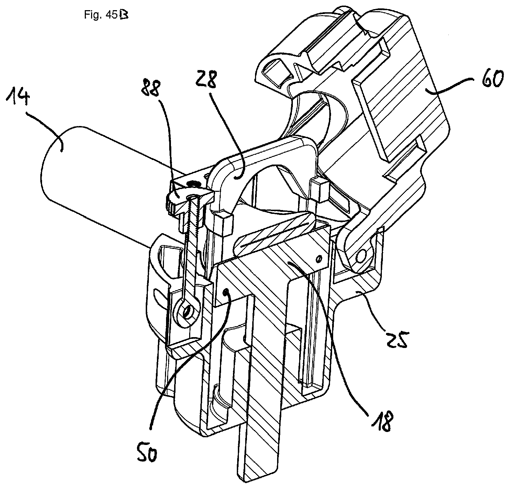

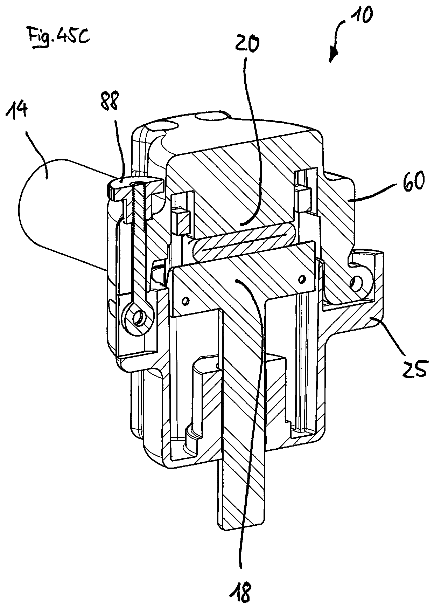

Aus Figur 45A geht hervor, dass das Schlauchquetschventil 10 zum Einlegen bzw. Wechseln des Schlauchabschnitts 14 ein verschwenkbares Gehäuseoberteil 60 aufweist, in dem der Rückstellrahmen 28 gehaltert ist. Der Rückstellrahmen 28 ist in diesem Fall mit dem Klemmelement 18 über eine selbstlösende und selbstverriegelnde Rastverbindung 62 gekoppelt, und er wird mit dem Gehäuseoberteil 60 weg geschwenkt. Wie aus Figur 45B hervorgeht, kann der Rückstellrahmen 28 aber auch von dem Gehäuseoberteil 60 separat sein.

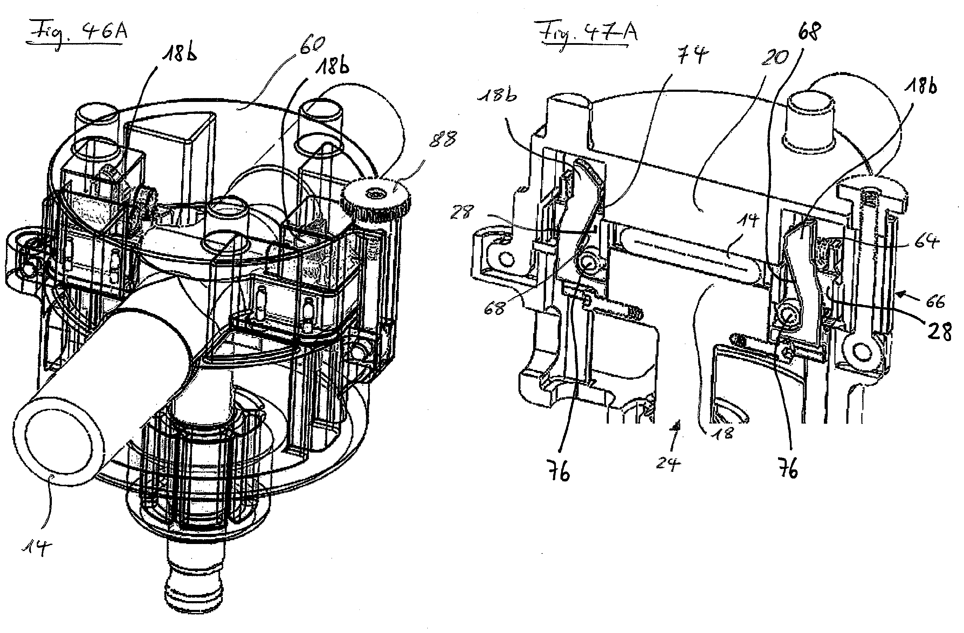

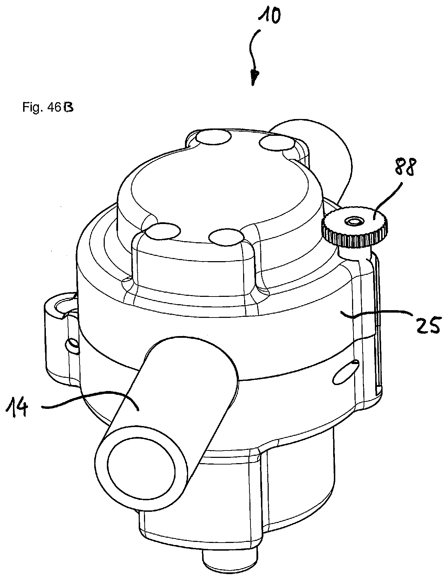

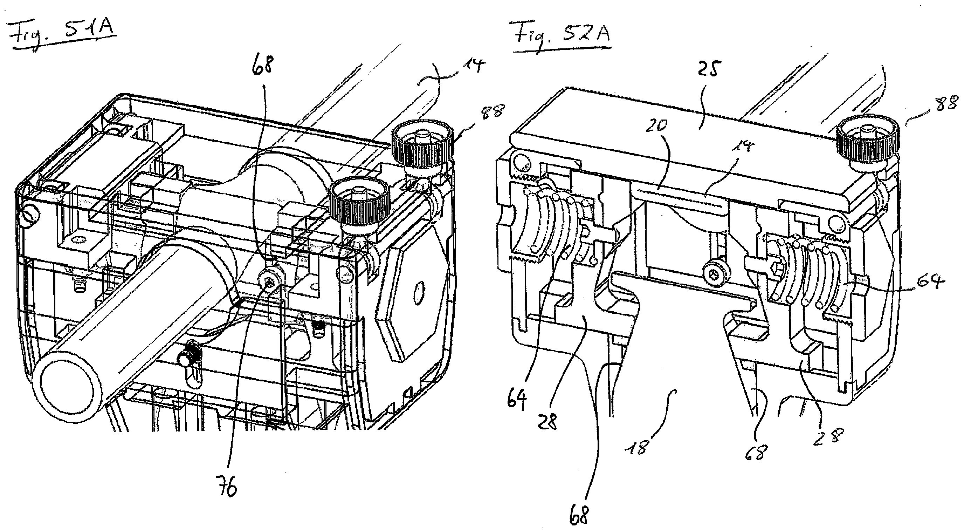

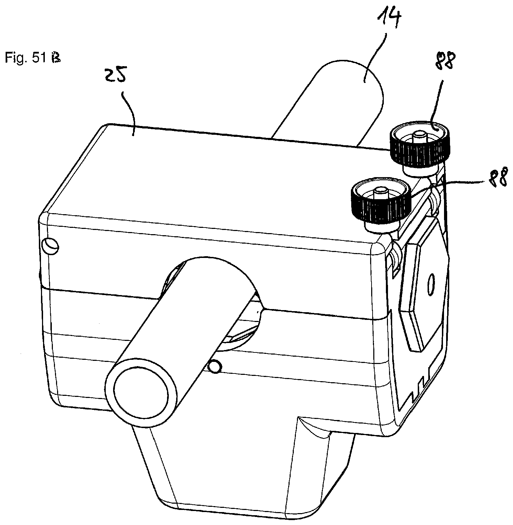

Das Schlauchquetschventil 10 mit der Rückstelleinrichtung 26 gemäß den Figuren 36-45 funktioniert folgendermaßen: Wenn sich das Klemmelement 18 in Quetschrichtung 24 gegen den Schlauchabschnitt 14 bewegt und diesen in den Sperrzustand bringt, gelangt der weite Bereich 54 des Rückstellrahmens 28 auf Höhe des Schlauchabschnitts 14, so dass dieser gequetscht wird und dabei seitlich ausweichen kann. Dies ist besonders gut aus Figur 37B ersichtlich. Wird das Klemmelement 18 dagegen entgegen der Quetschrichtung 24 vom Schlauchabschnitt 14 weg bewegt, gelangt der Bereich 56 auf Höhe des Schlauchabschnitts 14, so dass die Konuskanten der Ausnehmung 48 eine nach radial einwärts gerichtete Kraft (Pfeile 59 in Figur 36B) auf den Schlauchabschnitt 14 ausüben, wodurch dieser wieder in den Durchlasszustand gebracht wird, und zwar unabhängig von einem im Schlauchabschnitt 14 herrschenden Fluiddruck. Die in den Figuren 46-56 gezeigte Rückstelleinrichtung 26 weist zwei translatorisch bewegbare Rückstellelemente bzw. Rückstellabschnitte 28 auf, die beidseits von dem Schlauchabschnitt 14 angeordnet sind und jeweils von einer Feder 64 in einer Richtung 66 orthogonal sowohl zu der Quetschrichtung 24 als auch zur Schlauchachse 22 zum Schlauchabschnitt 14 hin (Figuren 51-56) bzw. vom Schlauchabschnitt 14 weg (Figuren 46-50) beaufschlagt bzw. bewegt werden, und die mit dem Klemmelement 18 über eine Kulisse 68 kinematisch gekoppelt sind. Der Rückstellabschnitt 28 ist in einer Richtung 66 verschieblich gelagert, die orthogonal sowohl zu der Quetschrichtung 24 als auch zur Schlauchachse 22 verläuft.

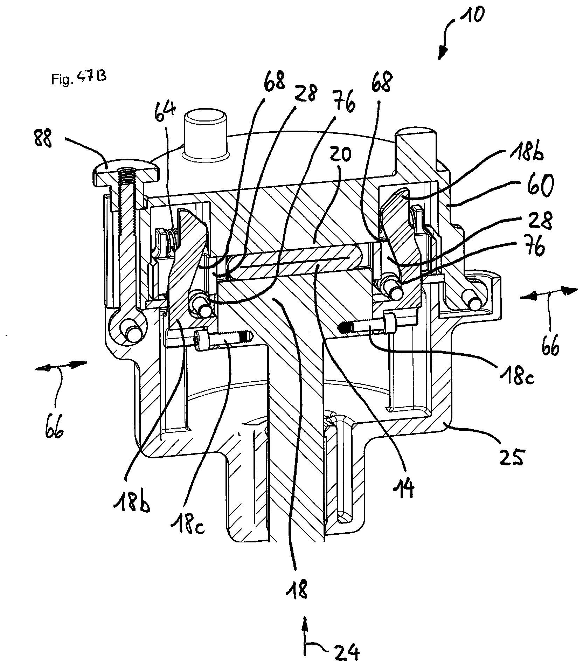

Die Kulisse 68 kann eine Seitenfläche 72 des Klemmelements 18 umfassen, entsprechend den Figuren 51-56, oder eine Seitenfläche 74 eines mit dem Klemmstück 18 mittels Schrauben 18C in Figur 47B starr verbundenen Kulissenstücks 18b umfassen, entsprechend den Figuren 46-50. Dabei kann die Kulisse 68 eine Gleitrolle 76 umfassen, die mit der Seitenfläche 74 zusammenwirkt, entsprechend den Figuren 46-50.

Die Rückstelleinrichtung 46 der Figuren 46-56 arbeitet folgendermaßen: bei geschlossenem Schlauchquetschventil 10, wie es beispielsweise in Figur 47B dargestellt ist, befindet sich das Klemmelement 18 in der Figur oben und quetscht den Schlauchabschnitt 14 zusammen. In diesem Betriebszustand befinden sich auch die Kulissenstücke 18B in der Figur in einer oberen Stellung, in der die Gleitrollen 76 lateral außen sind, weil das entsprechende Rückstellelement 28 durch die Feder 64 seitlich nach außen gedrückt wird. Die seitliche Ausdehnung des Schlauchabschnitts 14 im gequetschten Zustand wird somit nicht behindert.

Bei geöffnetem Schlauchquetschventil 10, welches in den Figuren nicht dargestellt ist, befindet sich das Klemmelement 18 vom Schlauchabschnitt 14 entfernt. Somit sind auch die Kulissenstücke 18B in den Figuren in einer relativ unteren Position, in der die Gleitrollen 76 nach innen gedrückt werden, und zwar entgegen der Kraft der Feder 64, die zwischen dem Gehäuse 25 und dem Rückstellelement 28 verspannt ist. Dadurch, dass die Gleitrollen 76 nach innen gedrückt werden, werden auch die Rückstellelemente 28 nach innen bzw. aufeinander zu gedrückt, so dass sie auf den seitlichen Bereich des Schlauchabschnitts 14 drücken, wodurch dieser wieder "auf" in seinen entfalteten Zustand gedrückt wird.

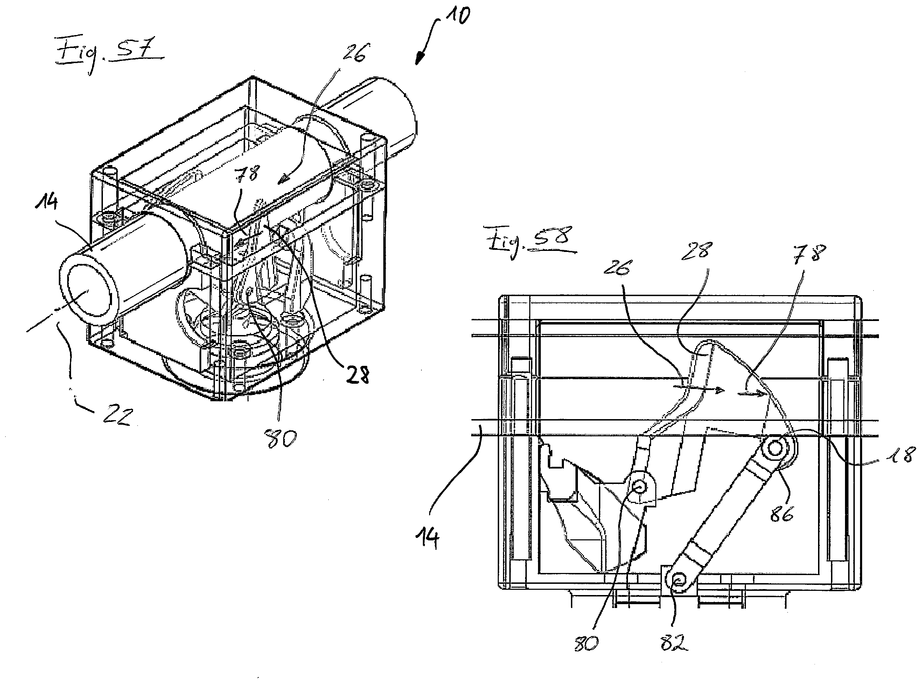

Die Rückstelleinrichtung 26 gemäß den Figuren 57-63 weist einen Rückstellabschnitt 28 auf, der wiederum seitlich vom Schlauchabschnitt 14 angreift und von der ersten Position in die zweite Position und zurück zumindest auch eine Bewegungskomponente 78 aufweist, die parallel zur Schlauchachse 22 verläuft. Dabei ist in der vorliegenden konkreten Ausführungsform der Rückstellabschnitt 28 um eine Schwenkachse 80 verschwenkbar, die orthogonal sowohl zu der Quetschrichtung 24 als auch zur Schlauchachse 22 verläuft.

Durch die Bewegungskomponente 78 "streicht" der Rückstellabschnitt 28 ausgehend von einem unverformten Bereich des Schlauchabschnitts 14 die durch die Quetschung bewirkte seitliche Verbreiterung weg. Er ist insoweit bei unverformtem Schlauchabschnitt 14, also bei offenem Schlauchquetschventil 10, unmittelbar benachbart zu dem Schlauchabschnitt 14 angeordnet, jedoch an einer in Richtung der Schlauchachse 22 gesehen anderen axialen Stelle als bei unverformtem Schlauch, also wenn das Schlauchquetschventil 10 geschlossen ist.

Der Klemmabschnitt 18 ist ebenfalls um eine Schwenkachse 82 verschwenkbar, die orthogonal sowohl zu der Quetschrichtung 24 als auch zur Schlauchachse 22 verläuft. Zum Schließen des Schlauchquetschventils 10 bewegt sich der Klemmabschnitt 18 also nicht, wie bei den vorhergehenden Ausführungsformen, ausschließlich oder zumindest weitgehend orthogonal zur Schlauchachse 22, sondern er vollzieht eine Bewegung entlang einer Kreisbahn, deren "tiefster" Punkt so gelegt ist, dass dann, wenn sich der Klemmabschnitt 18 in dieser Position befindet, der Schlauchabschnitt 14 gequetscht bzw. geschlossen ist. Dabei sind der Klemmabschnitt 18 und der Rückstellabschnitt 28 mittels einer Art Pleuel 84 miteinander gekoppelt. Der Klemmabschnitt 18 weist zum Schlauchabschnitt 14 hin eine Rolle 86 auf. Durch diese Rolle 86 wird die Reibung zwischen dem Klemmabschnitt 18 und dem Schlauchabschnitt 14 reduziert, was der Lebensdauer des Schlauchabschnitts 14 zu Gute kommt und die für eine Betätigung erforderliche Kraft reduziert.

In einigen Figuren sind im Übrigen Rändelschrauben 88 sichtbar, durch die das im Wesentlichen zweiteilige Ventilgehäuse 25 zusammengeschraubt wird. Durch ein Lösen der Rändelschrauben 88 wird das Gehäuse 25 geöffnet, so dass der Schlauchabschnitt 14 ausgewechselt werden kann.

## Patentansprüche

1. Schlauchquetschventil (10),
mit einer Schlauchaufnahme (12) zur Aufnahme eines auswechselbaren flexiblen Schlauchabschnitts (14),
mit einer Quetscheinrichtung (16) mit einem Klemmelement (18) und einem diesem zugeordneten Widerlager (20), wobei der in der Schlauchaufnahme (12) aufgenommene flexible Schlauchabschnitt (14) durch Bewegen des Klemmelements (18) zwischen Klemmelement (18) und Widerlager (20) aus einem Durchlasszustand in einen Sperrzustand in einer zu einer Schlauchachse (22) orthogonalen Quetschrichtung (24) quetschbar ist,
und mit einem im Bereich der Schlauchaufnahme (12) angeordneten beweglichen Rückstellelement (28), welches in einer ersten Position eine durch das Quetschen bewirkte Dimensionsvergrößerung des Schlauchabschnittes (14) orthogonal sowohl zu der Quetschrichtung (24) als auch zur Schlauchachse (22) zulässt und in einer zweiten Position eine sowohl zur Quetschrichtung (24) als auch zur Schlauchachse (22) orthogonale Kraftkomponente auf den Schlauchabschnitt (14) aufbringt,
wobei es mindestens eine Adaptereinrichtung (30) aufweist, welche in Einbaulage im Bereich der Schlauchaufnahme (12) angeordnet und ausgebildet ist, um in Einbaulage einen effektiven Querschnitt wenigstens eines Bereichs der Schlauchaufnahme (12) zu verändern,
**dadurch gekennzeichnet,**
**dass** die Adaptereinrichtung (30) einen auswechselbaren O-Ring (34) umfasst, der in unverformtem Zustand in einer Ebene angeordnet ist, in der die Schlauchachse (22) liegt, oder die parallel zu dieser Ebene ist.

2. Schlauchquetschventil (10) nach Anspruch 1, **dadurch gekennzeichnet, dass** im Bereich der Schlauchaufnahme (12) eine Nut (36) zur Fixierung des O-Rings (34) angeordnet ist und/oder eine Mehrzahl von Zapfen (38) angeordnet ist, um die der O-Ring (34) gelegt oder gespannt ist.

3. Schlauchquetschventil (10),
mit einer Schlauchaufnahme (12) zur Aufnahme eines auswechselbaren flexiblen Schlauchabschnitts (14),
mit einer Quetscheinrichtung (16) mit einem Klemmelement (18) und einem diesem zugeordneten Widerlager (20), wobei der in der Schlauchaufnahme (12) aufgenommene flexible Schlauchabschnitt (14) durch Bewegen des Klemmelements (18) zwischen Klemmelement (18) und Widerlager (20) aus einem Durchlasszustand in einen Sperrzustand in einer zu einer Schlauchachse (22) orthogonalen Quetschrichtung (24) quetschbar ist,
und mit einem im Bereich der Schlauchaufnahme (12) angeordneten beweglichen Rückstellelement (28), welches in einer ersten Position eine durch das Quetschen bewirkte Dimensionsvergrößerung des Schlauchabschnittes (14) orthogonal sowohl zu der Quetschrichtung (24) als auch zur Schlauchachse (22) zulässt und in einer zweiten Position eine sowohl zur Quetschrichtung (24) als auch zur Schlauchachse (22) orthogonale Kraftkomponente auf den Schlauchabschnitt (14) aufbringt,
wobei es mindestens eine Adaptereinrichtung (30) aufweist, welche in Einbaulage im Bereich der Schlauchaufnahme (12) angeordnet und ausgebildet ist, um in Einbaulage einen effektiven Querschnitt wenigstens eines Bereichs der Schlauchaufnahme (12) zu verändern,
**dadurch gekennzeichnet, dass**
dass die Adaptereinrichtung (30) ein auswechselbares Adapterelement (34) mit mindestens einer konkaven, vorzugsweise halbkreisförmigen Ausnehmung (40) umfasst, wobei eine Stirnfläche (42) der konkaven Ausnehmung (40) als Auflagefläche für den flexiblen Schlauchabschnitt (14) dient, und
dass das Adapterelement (34) eine Mehrzahl von konkaven, vorzugsweise halbkreisförmigen Ausnehmungen (40a, 40b) umfasst, die für unterschiedliche Schlauchdurchmesser ausgelegt sind.

4. Schlauchquetschventil (10),
mit einer Schlauchaufnahme (12) zur Aufnahme eines auswechselbaren flexiblen Schlauchabschnitts (14),
mit einer Quetscheinrichtung (16) mit einem Klemmelement (18) und einem diesem zugeordneten Widerlager (20), wobei der in der Schlauchaufnahme (12) aufgenommene flexible Schlauchabschnitt (14) durch Bewegen des Klemmelements (18) zwischen Klemmelement (18) und Widerlager (20) aus einem Durchlasszustand in einen Sperrzustand in einer zu einer Schlauchachse (22) orthogonalen Quetschrichtung (24) quetschbar ist,
und mit einem im Bereich der Schlauchaufnahme (12) angeordneten beweglichen Rückstellelement (28), welches in einer ersten Position eine durch das Quetschen bewirkte Dimensionsvergrößerung des Schlauchabschnittes (14) orthogonal sowohl zu der Quetschrichtung (24) als auch zur Schlauchachse (22) zulässt und in einer zweiten Position eine sowohl zur Quetschrichtung (24) als auch zur Schlauchachse (22) orthogonale Kraftkomponente auf den Schlauchabschnitt (14) aufbringt,
wobei es mindestens eine Adaptereinrichtung (30) aufweist, welche in Einbaulage im Bereich der Schlauchaufnahme (12) angeordnet und ausgebildet ist, um in Einbaulage einen effektiven Querschnitt wenigstens eines Bereichs der Schlauchaufnahme (12) zu verändern,
wobei ein den Schlauchabschnitt (14) kontaktierender Stützabschnitt (32) der Adaptereinrichtung (30) in Richtung der Schlauchachse (22) gesehen von der Quetscheinrichtung (16) beabstandet ist,
**dadurch gekennzeichnet,**
**dass** die Adaptereinrichtung (30) prismenförmige Adapterelemente (34) mit einer konischen Ausnehmung (40) umfasst, wobei eine schräge Stirnfläche (42) der konischen Ausnehmung (40) als Auflagefläche für den flexiblen Schlauchabschnitt (14) dient, und wobei das Adapterelement (34) in zum Schlauchabschnitt (14) radialer Richtung federnd gelagert ist, indem eine Feder (44) zwischen dem Gehäuse (25) und dem Adapterelement (34) verspannt ist.

5. Schlauchquetschventil (10),
mit einer Schlauchaufnahme (12) zur Aufnahme eines auswechselbaren flexiblen Schlauchabschnitts (14),
mit einer Quetscheinrichtung (16) mit einem Klemmelement (18) und einem diesem zugeordneten Widerlager (20), wobei der in der Schlauchaufnahme (12) aufgenommene flexible Schlauchabschnitt (14) durch Bewegen des Klemmelements (18) zwischen Klemmelement (18) und Widerlager (20) aus einem Durchlasszustand in einen Sperrzustand in einer zu einer Schlauchachse (22) orthogonalen Quetschrichtung (24) quetschbar ist,
und mit einem im Bereich der Schlauchaufnahme (12) angeordneten beweglichen Rückstellelement (28), welches in einer ersten Position eine durch das Quetschen bewirkte Dimensionsvergrößerung des Schlauchabschnittes (14) orthogonal sowohl zu der Quetschrichtung (24) als auch zur Schlauchachse (22) zulässt und in einer zweiten Position eine sowohl zur Quetschrichtung (24) als auch zur Schlauchachse (22) orthogonale Kraftkomponente auf den Schlauchabschnitt (14) aufbringt,
wobei es mindestens eine Adaptereinrichtung (30) aufweist, welche in Einbaulage im Bereich der Schlauchaufnahme (12) angeordnet und ausgebildet ist, um in Einbaulage einen effektiven Querschnitt wenigstens eines Bereichs der Schlauchaufnahme (12) zu verändern
wobei ein den Schlauchabschnitt (14) kontaktierender Stützabschnitt (32) der Adaptereinrichtung (30) in Richtung der Schlauchachse (22) gesehen von der Quetscheinrichtung (16) beabstandet ist,
**dadurch gekennzeichnet, dass**
dass die Adaptereinrichtung (30) ein prismenförmiges Adapterelement (34) mit einer konischen Ausnehmung (40) umfasst, wobei eine schräge Stirnfläche (42) der konischen Ausnehmung (40) als Auflagefläche für den flexiblen Schlauchabschnitt (14) dient, und
dass zwischen dem Gehäuse (25) und dem Adapterelement (34) ein Satz von Ausgleichsplatten mit unterschiedlicher Dicke vorgesehen ist.

6. Schlauchquetschventil (10),
mit einer Schlauchaufnahme (12) zur Aufnahme eines auswechselbaren flexiblen Schlauchabschnitts (14),
mit einer Quetscheinrichtung (16) mit einem Klemmelement (18) und einem diesem zugeordneten Widerlager (20), wobei der in der Schlauchaufnahme (12) aufgenommene flexible Schlauchabschnitt (14) durch Bewegen des Klemmelements (18) zwischen Klemmelement (18) und Widerlager (20) aus einem Durchlasszustand in einen Sperrzustand in einer zu einer Schlauchachse (22) orthogonalen Quetschrichtung (24) quetschbar ist,
und mit einem im Bereich der Schlauchaufnahme (12) angeordneten beweglichen Rückstellelement (28), welches in einer ersten Position eine durch das Quetschen bewirkte Dimensionsvergrößerung des Schlauchabschnittes (14) orthogonal sowohl zu der Quetschrichtung (24) als auch zur Schlauchachse (22) zulässt und in einer zweiten Position eine sowohl zur Quetschrichtung (24) als auch zur Schlauchachse (22) orthogonale Kraftkomponente auf den Schlauchabschnitt (14) aufbringt,
wobei es mindestens eine Adaptereinrichtung (30) aufweist, welche in Einbaulage im Bereich der Schlauchaufnahme (12) angeordnet und ausgebildet ist, um in Einbaulage einen effektiven Querschnitt wenigstens eines Bereichs der Schlauchaufnahme (12) zu verändern
wobei ein den Schlauchabschnitt (14) kontaktierender Stützabschnitt (32) der Adaptereinrichtung (30) in Richtung der Schlauchachse (22) gesehen von der Quetscheinrichtung (16) beabstandet ist,
**dadurch gekennzeichnet, dass**
dass die Adaptereinrichtung (30) einen Gewindeschieber (34) umfasst, der als Inbusschraube ausgebildet ist, die in eine Gewindeöffnung im Gehäuse (25) eingeschraubt wird und im Bereich der Schlauchaufnahme (12) ein einstellbares Gegenlager für den Schlauchabschnitt (14) bildet und/oder die Adaptereinrichtung (30) ein gefedertes Druckstück umfasst, wobei sich eine Feder (44) an einer in das Gehäuse (25) eingeschraubten Gewindehülse (45) abstützt, wodurch die Federvorspannung und dadruch die auf den Schlauchabschnitt (14) einwirkende Haltekraft eingestellt werden kann.

## Claims

1. Tubing pinch valve (10),
having a tubing holder (12) to hold a portion (14) of exchangeable flexible tubing (14),
having a pinching means (16) which has a clamping member (18) and an abutment (20) associated with the latter, the flexible tubing portion (14) held in the tubing holder (12) being able, by movement of the clamping member (18), to be pinched between the clamping member (18) and the abutment (20) from a flow-permitting state to a blocking state in a direction of pinching (24) orthogonal to a tubing axis (22),
and having a movable resetting member (28) arranged in the region of the tubing holder (12) which, in a first position, permits an increase in a dimension of the tubing portion (14) caused by the pinching, orthogonally both to the direction of pinching (24) and to the tubing axis (22), and, in a second position, applies to the tubing portion (14) a component of force which is orthogonal both to the direction of pinching (24) and to the tubing axis (22),
the tubing pinch valve (10) having at least one adapter means (30) which, in an installed position, is arranged in the region of the tubing holder (12) and which is designed to, in an installed position, change an effective cross-section of at least one region of the tubing holder (12),
**characterised in that** the adapter means (30) comprises an exchangeable O-ring (34) which, in the undeformed state, is arranged in a plane in which the tubing axis (22) lies or which is parallel to this plane.

2. Tubing pinch valve (10) according to claim 1, **characterised in that**, arranged in the region of the tubing holder (12), there are a groove (36) for fixing the O-ring (34) in position and/or a plurality of spigots (38) around which the O-ring (34) is placed or tensioned.

3. Tubing pinch valve (10),
having a tubing holder (12) to hold a portion (14) of exchangeable flexible tubing (14),
having a pinching means (16) which has a clamping member (18) and an abutment (20) associated with the latter, the flexible tubing portion (14) held in the tubing holder (12) being able, by movement of the clamping member (18), to be pinched between the clamping member (18) and the abutment (20) from a flow-permitting state to a blocking state in a direction of pinching (24) orthogonal to a tubing axis (22),
and having a movable resetting member (28) arranged in the region of the tubing holder (12) which, in a first position, permits an increase in a dimension of the tubing portion (14) caused by the pinching, orthogonally both to the direction of pinching (24) and to the tubing axis (22), and, in a second position, applies to the tubing portion (14) a component of force which is orthogonal both to the direction of pinching (24) and to the tubing axis (22),
the tubing pinch valve (10) having at least one adapter means (30) which, in an installed position, is arranged in the region of the tubing holder (12) and which is designed to, in an installed position, change an effective cross-section of at least one region of the tubing holder (12),
**characterised in that**
the adapter means (30) comprises an exchangeable adapter member (34) having at least one concave and preferably semi-circular recess (40), with a front face (42) of the concave recess (40) acting as a supporting surface for the flexible tubing portion (14), and **in that** the adapter member (34) comprises a plurality of concave and preferably semi-circular recesses (40a, 40b) which are designed for different diameters of tubing.

4. Tubing pinch valve (10),
having a tubing holder (12) to hold a portion (14) of exchangeable flexible tubing (14),
having a pinching means (16) which has a clamping member (18) and an abutment (20) associated with the latter, the flexible tubing portion (14) held in the tubing holder (12) being able, by movement of the clamping member (18), to be pinched between the clamping member (18) and the abutment (20) from a flow-permitting state to a blocking state in a direction of pinching (24) orthogonal to a tubing axis (22),
and having a movable resetting member (28) arranged in the region of the tubing holder (12) which, in a first position, permits an increase in a dimension of the tubing portion (14) caused by the pinching, orthogonally both to the direction of pinching (24) and to the tubing axis (22), and, in a second position, applies to the tubing portion (14) a component of force which is orthogonal both to the direction of pinching (24) and to the tubing axis (22),
the tubing pinch valve (10) having at least one adapter means (30) which, in an installed position, is arranged in the region of the tubing holder (12) and which is designed to, in an installed position, change an effective cross-section of at least one region of the tubing holder (12),
with, looking in the direction of the tubing axis (22), a supporting portion (32) of the adapter means (30), which makes contact with the tubing portion (14), being spaced away from the pinching means (16),
**characterised in that**
the adapter means (30) comprises prismatic adapter members (34) having a tapering recess (40), an oblique front face (42) of the tapering recess (40) acting as a supporting surface for the flexible tubing portion (14), and the adapter member (34) being resiliently mounted in a direction radial to the tubing portion (14) **in that** a spring (44) is braced between the valve body (25) and the adapter member (34).

5. Tubing pinch valve (10),
having a tubing holder (12) to hold a portion (14) of exchangeable flexible tubing (14),
having a pinching means (16) which has a clamping member (18) and an abutment (20) associated with the latter, the flexible tubing portion (14) held in the tubing holder (12) being able, by movement of the clamping member (18), to be pinched between the clamping member (18) and the abutment (20) from a flow-permitting state to a blocking state in a direction of pinching (24) orthogonal to a tubing axis (22),
and having a movable resetting member (28) arranged in the region of the tubing holder (12) which, in a first position, permits an increase in a dimension of the tubing portion (14) caused by the pinching, orthogonally both to the direction of pinching (24) and to the tubing axis (22), and, in a second position, applies to the tubing portion (14) a component of force which is orthogonal both to the direction of pinching (24) and to the tubing axis (22),
the tubing pinch valve (10) having at least one adapter means (30) which, in an installed position, is arranged in the region of the tubing holder (12) and which is designed to, in an installed position, change an effective cross-section of at least one region of the tubing holder (12),
with, looking in the direction of the tubing axis (22), a supporting portion (32) of the adapter means (30), which makes contact with the tubing portion (14), being spaced away from the pinching means (16),
**characterised in that**
the adapter means (30) comprises a prismatic adapter member (34) having a tapering recess (40), an oblique front face (42) of the tapering recess (40) acting as a supporting surface for the flexible tubing portion (14), and **in that** a set of shims of different thicknesses is provided between the valve body (25) and the adapter member (34).

6. Tubing pinch valve (10),
having a tubing holder (12) to hold a portion (14) of exchangeable flexible tubing (14),
having a pinching means (16) which has a clamping member (18) and an abutment (20) associated with the latter, the flexible tubing portion (14) held in the tubing holder (12) being able, by movement of the clamping member (18), to be pinched between the clamping member (18) and the abutment (20) from a flow-permitting state to a blocking state in a direction of pinching (24) orthogonal to a tubing axis (22),
and having a movable resetting member (28) arranged in the region of the tubing holder (12) which, in a first position, permits an increase in a dimension of the tubing portion (14) caused by the pinching, orthogonally both to the direction of pinching (24) and to the tubing axis (22), and, in a second position, applies to the tubing portion (14) a component of force which is orthogonal both to the direction of pinching (24) and to the tubing axis (22),
the tubing pinch valve (10) having at least one adapter means (30) which, in an installed position, is arranged in the region of the tubing holder (12) and which is designed to, in an installed position, change an effective cross-section of at least one region of the tubing holder (12),
with, looking in the direction of the tubing axis (22), a supporting portion (32) of the adapter means (30), which makes contact with the tubing portion (14), being spaced away from the pinching means (16),
**characterised in that**
the adapter means (30) comprises a threaded displaceable member (34) in the form of a socket screw which is screwed into a threaded opening in the valve body (25) and which forms, in the region of the tubing holder (12), a settable abutment for the tubing portion (14), and/or the adapter means (30) comprises a sprung pressure-applying piece, with a spring (44) being supported against a threaded sleeve (45) which is screwed into the valve body (25), whereby the preloading of the spring, and hence the retaining force acting on the tubing portion (14), can be set.

## Revendications

1. Robinet à manchon (10),
avec un logement de tube souple (12) destiné à loger une section de tube souple (14) remplaçable,
avec un dispositif presseur (16) muni d'un élément de serrage (18) et d'une butée (20) associée audit élément, dans lequel la section de tube souple (14) flexible logée dans le logement de tube souple (12) peut être comprimée dans une direction de compression (24) orthogonale par rapport à un axe de tube souple (22) à partir d'un état de voie libre jusqu'à un état de barrage grâce à un déplacement de l'élément de serrage (18) entre l'élément de serrage (18) et la butée (20),
et avec un élément de rappel (28) mobile, agencé dans le secteur du logement de tube souple (12), qui, dans une première position, autorise un accroissement dimensionnel, provoqué par la compression, de la section de tube souple (14) de manière orthogonale tant par rapport à la direction de compression (24) que par rapport à l'axe de tube souple (22), et qui, dans une seconde position, applique une composante de force orthogonale tant par rapport à la direction de compression (24) que par rapport à l'axe de tube souple (22),
dans lequel ledit robinet présente au moins un dispositif adaptateur (30) qui, en position d'installation, est agencé et réalisé dans le secteur du logement de tube souple (12), afin de modifier une section transversale efficace d'au moins un secteur du logement de tube souple (12) dans la position d'installation,
**caractérisé en ce que**,
le dispositif adaptateur (30) comprend un joint torique (34) remplaçable qui, à l'état non déformé, est agencé dans un plan au sein duquel se situe l'axe de tube souple (22), ou bien ledit axe est parallèle audit plan.

2. Robinet à manchon (10) selon la revendication 1, **caractérisé en ce qu'**une gorge (36) destinée à la fixation du joint torique (34) est agencée dans le secteur du logement de tube souple (12) et/ou une pluralité de tenons (38), autour desquels le joint torique (34) est posé ou mis en tension, sont agencés dans ledit secteur.

3. Robinet à manchon (10),
avec un logement de tube souple (12) destiné à loger une section de tube souple (14) remplaçable,
avec un dispositif presseur (16) muni d'un élément de serrage (18) et d'une butée (20) associée audit élément, dans lequel la section de tube souple (14) flexible logée dans le logement de tube souple (12) peut être comprimée dans une direction de compression (24) orthogonale par rapport à un axe de tube souple (22) à partir d'un état de voie libre jusqu'à un état de barrage grâce à un déplacement de l'élément de serrage (18) entre l'élément de serrage (18) et la butée (20),
et avec un élément de rappel (28) mobile, agencé dans le secteur du logement de tube souple (12), qui, dans une première position, autorise un accroissement dimensionnel, provoqué par la compression, de la section de tube souple (14) de manière orthogonale tant par rapport à la direction de compression (24) que par rapport à l'axe de tube souple (22), et qui, dans une seconde position, applique une composante de force orthogonale tant par rapport à la direction de compression (24) que par rapport à l'axe de tube souple (22) à la section de tube souple (14),
dans lequel ledit robinet présente au moins un dispositif adaptateur (30) qui, en position d'installation, est agencé et réalisé dans le secteur du logement de tube souple (12), afin de modifier une section transversale efficace d'au moins un secteur du logement de tube souple (12) dans la position d'installation,
**caractérisé en ce que**,
le dispositif adaptateur (30) comprend un élément adaptateur (34) remplaçable muni d'au moins un évidement concave, de manière préférée semi-circulaire (40), dans lequel une surface avant (42) de l'évidement concave (40) sert de surface d'appui pour la section de tube souple (14) flexible, et
l'élément adaptateur (34) comprend une pluralité d'évidements concaves, de manière préférée semi-circulaires (40a, 40b), conçus pour différents diamètres de tube souple.

4. Robinet à manchon (10),
avec un logement de tube souple (12) destiné à loger une section de tube souple (14) remplaçable,
avec un dispositif presseur (16) muni d'un élément de serrage (18) et d'une butée (20) associée audit élément, dans lequel la section de tube souple (14) flexible logée dans le logement de tube souple (12) peut être comprimée dans une direction de compression (24) orthogonale par rapport à un axe de tube souple (22) à partir d'un état de voie libre jusqu'à un état de barrage grâce à un déplacement de l'élément de serrage (18) entre l'élément de serrage (18) et la butée (20),
et avec un élément de rappel (28) mobile, agencé dans le secteur du logement de tube souple (12), qui, dans une première position, autorise un accroissement dimensionnel, provoqué par la compression, de la section de tube souple (14) de manière orthogonale tant par rapport à la direction de compression (24) que par rapport à l'axe de tube souple (22), et qui, dans une seconde position, applique une composante de force orthogonale tant par rapport à la direction de compression (24) que par rapport à l'axe de tube souple (22),
dans lequel ledit robinet présente au moins un dispositif adaptateur (30) qui, en position d'installation, est agencé et réalisé dans le secteur du logement de tube souple (12), afin de modifier une section transversale efficace d'au moins un secteur du logement de tube souple (12) dans la position d'installation,
dans lequel, vu dans la direction de l'axe de tube souple (22), une section de support (32), en contact avec la section de tube souple (14), du dispositif adaptateur (30) est espacée par rapport au dispositif presseur (16),
**caractérisé en ce que**
le dispositif adaptateur (30) comprend des éléments adaptateurs (34) en forme de prisme et munis d'un évidement conique (40), dans lequel une surface avant (42) oblique de l'évidement conique (40) sert de surface d'appui pour la section de tube souple (14), et dans lequel l'élément adaptateur (34) est monté de manière résiliente dans la direction radiale par rapport à la section de tube souple (14) grâce à la mise en tension d'un ressort (44) entre le boîtier (25) et l'élément d'adaptateur (34).

5. Robinet à manchon (10),
avec un logement de tube souple (12) destiné à loger une section de tube souple (14) remplaçable,
avec un dispositif presseur (16) muni d'un élément de serrage (18) et d'une butée (20) associée audit élément, dans lequel la section de tube souple (14) flexible logée dans le logement de tube souple (12) peut être comprimée dans une direction de compression (24) orthogonale par rapport à un axe de tube souple (22) à partir d'un état de voie libre jusqu'à un état de barrage grâce à un déplacement de l'élément de serrage (18) entre l'élément de serrage (18) et la butée (20),
et avec un élément de rappel (28) mobile, agencé dans le secteur du logement de tube souple (12), qui, dans une première position, autorise un accroissement dimensionnel, provoqué par la compression, de la section de tube souple (14) de manière orthogonale tant par rapport à la direction de compression (24) que par rapport à l'axe de tube souple (22), et qui, dans une seconde position, applique une composante de force orthogonale tant par rapport à la direction de compression (24) que par rapport à l'axe de tube souple (22) à la section de tube souple (14),
dans lequel ledit robinet présente au moins un dispositif adaptateur (30) qui, en position d'installation, est agencé et réalisé dans le secteur du logement de tube souple (12), afin de modifier une section transversale efficace d'au moins un secteur du logement de tube souple (12) dans la position d'installation,
dans lequel, vu dans la direction de l'axe de tube souple (22), une section de support (32), en contact avec la section de tube souple (14), du dispositif adaptateur (30) est espacée par rapport au dispositif presseur (16),
**caractérisé en ce que**
le dispositif adaptateur (30) comprend un élément adaptateur (34) en forme de prisme et muni d'un évidement conique (40), dans lequel une surface avant (42) oblique de l'évidement conique (40) sert de surface d'appui pour la section de tube souple (14), et
**en ce que** un groupe de plaques de compensation d'épaisseurs différentes est prévu entre le boîtier (25) et l'élément adaptateur (34).

6. Robinet à manchon (10),
avec un logement de tube souple (12) destiné à loger une section de tube souple (14) remplaçable,
avec un dispositif presseur (16) muni d'un élément de serrage (18) et d'une butée (20) associée audit élément, dans lequel la section de tube souple (14) flexible logée dans le logement de tube souple (12) peut être comprimée dans une direction de compression (24) orthogonale par rapport à un axe de tube souple (22) à partir d'un état de voie libre jusqu'à un état de barrage grâce à un déplacement de l'élément de serrage (18) entre l'élément de serrage (18) et la butée (20),
et avec un élément de rappel (28) mobile, agencé dans le secteur du logement de tube souple (12), qui, dans une première position, autorise un accroissement dimensionnel, provoqué par la compression, de la section de tube souple (14) de manière orthogonale tant par rapport à la direction de compression (24) que par rapport à l'axe de tube souple (22), et qui, dans une seconde position, applique une composante de force orthogonale tant par rapport à la direction de compression (24) que par rapport à l'axe de tube souple (22) à la section de tube souple (14),
dans lequel ledit robinet présente au moins un dispositif adaptateur (30) qui, en position d'installation, est agencé et réalisé dans le secteur du logement de tube souple (12), afin de modifier une section transversale efficace d'au moins un secteur du logement de tube souple (12) dans la position d'installation,
dans lequel, vu dans la direction de l'axe de tube souple (22), une section de support (32), en contact avec la section de tube souple (14), du dispositif adaptateur (30) est espacée par rapport au dispositif presseur (16),
**caractérisé en ce que**
le dispositif adaptateur (30) comprend un coulisseau fileté (34) conçu comme une vis à six pans creux qui est vissée dans une ouverture filetée du boîtier (25) et forme une butée réglable pour la section de tube souple (14) dans la région du logement de tube souple (12) et/ou le dispositif adaptateur (30) comprend une pièce de pression à ressort, dans lequel un ressort (44) s'appuie sur un manchon fileté (45) vissé dans le logement (25), ce qui permet de régler la précontrainte du ressort et donc la force de retenue agissant sur la section de tube souple (14).
